(19) Europäisches Patentamt
European Patent Office
Office européen des brevets

(11) **EP 2 623 377 A1**

(12) **EUROPÄISCHE PATENTANMELDUNG**

(43) Veröffentlichungstag:
**07.08.2013 Patentblatt 2013/32**

(51) Int Cl.:
***B60R 21/0136*** *(2006.01)*

(21) Anmeldenummer: **13151547.0**

(22) Anmeldetag: **17.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **03.02.2012 DE 102012201646**

(71) Anmelder: **ROBERT BOSCH GMBH**
**70442 Stuttgart (DE)**

(72) Erfinder:
- **Freienstein, Heiko**
  **71263 Weil Der Stadt (DE)**
- **Lich, Thomas**
  **71409 Schwaikheim (DE)**
- **Saynisch, Ivor**
  **70597 Stuttgart-Degerloch (DE)**
- **Lang, Gunther**
  **70563 Stuttgart (DE)**
- **Kolatschek, Josef**
  **71263 Weil Der Stadt (DE)**

(54) **Verfahren und Vorrichtung zur Bestimmung einer Kollisionsgeschwindigkeit bei einer Kollision eines Fahrzeugs**

(57) Die Erfindung betrifft ein Verfahren zur Bestimmung einer Kollisionsgeschwindigkeit bei einer Kollision eines Fahrzeugs, welches einen Schritt des Ermittelns und einen Schritt des Bestimmens umfasst. Im Schritt des Ermittelns (130) wird ein Zeitpunkt eines signifikan-ten Signalverlaufs eines Kollisionssignals, das ein Signal eines Sensors (110) des Fahrzeuges (100) repräsentiert, ermittelt. Im Schritt des Bestimmens (140) wird die Kollisionsgeschwindigkeit unter Verwendung des Zeitpunkts des signifikanten Signalverlaufs bestimmt.

**FIG. 1**

EP 2 623 377 A1

**Beschreibung**

Stand der Technik

Die vorliegende Erfindung bezieht sich auf ein Verfahren zur Bestimmung einer Kollisionsgeschwindigkeit bei einer Kollision eines Fahrzeugs, auf eine entsprechende Vorrichtung sowie auf ein entsprechendes Computerprogrammprodukt.

Beschleunigungssensoren eines Fahrzeugs werden zum Auslösen von Insassenschutzsystemen wie Airbags oder Gurtstraffern verwendet. Beispielsweise kann eine Kollisionsgeschwindigkeit integrativ aus Signalen von Beschleunigungssensoren berechnet werden.

Offenbarung der Erfindung

Vor diesem Hintergrund wird mit der vorliegenden Erfindung ein Verfahren zur Bestimmung einer Kollisionsgeschwindigkeit bei einer Kollision eines Fahrzeugs, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Zur Auslösung von Insassenschutzmitteln eines Fahrzeugs ist die Kollisionsgeschwindigkeit, auch Aufprallgeschwindigkeit genannt, von Interesse. Zur Bestimmung der Kollisionsgeschwindigkeit kann ein Signal eines in einem Fahrzeug verbauten Sensors analysiert werden. Dabei kann ein signifikanter Signalverlauf des Signals gesucht werden. Abhängig von einem Auftreten des signifikanten Signalverlaufs und insbesondere eines Zeitpunkts des signifikanten Signalverlaufs kann die Kollisionsgeschwindigkeit bestimmt werden.

Im Gegensatz zur beschleunigungsbasierten Crasherkennung, bei der der integrativ berechnete Geschwindigkeitsabbau in den ersten 10ms bis 50ms nur einen vagen Ausblick auf die wirkliche, erst am Ende der Kollision (nach ca. 100ms) vollständig abgebaute Geschwindigkeit des Aufpralls oder der Kollision erlaubt, kann bei der Bestimmung der Kollisionsgeschwindigkeit basierend auf einem signifikanten Signalverlauf bereits in der frühen Phase der Kollision eine Aussage zur Kollisionsgeschwindigkeit getroffen werden. Es kann also beispielsweise bereits in den ersten 50ms nach der Kollision eine relativ genaue Aussage über die Kollisionsgeschwindigkeit getroffen werden. Eine Extrapolation zu diesem frühen Zeitpunkt wird durch die inhomogene Struktur der Fahrzeuge bzw. des Fahrzeugs gegen eine beliebig strukturierte Barriere bei einem rein integrativen Ansatz erschwert, da ein kritischer Unfall anfangs sehr weich (Crashbox im Fahrzeug usw.) mit geringem Geschwindigkeitsabbau in einen später harten (Aufprall auf den Motorblock usw.) mit starkem Abbau übergehen kann. Diese Übergänge bieten charakteristische Informationen im Signalverlauf, die zur Bestimmung der Kollisionsgeschwindigkeit ausgewertet werden können.

Vorteilhafterweise kann die Verwendung des signifikanten Signalverlaufs zur Bestimmung der Kollisionsgeschwindigkeit zu einer gesteigerten Performanz bei Systemen ohne Geschwindigkeitssensor und zu einer gesteigerten Robustheit gegenüber falscher Geschwindigkeitsinformation bei Systemen mit Geschwindigkeitssensor führen.

Die vorliegende Erfindung schafft ein Verfahren zur Bestimmung einer Kollisionsgeschwindigkeit bei einer Kollision eines Fahrzeugs, welches die folgenden Schritte umfasst:

Ermitteln eines Zeitpunkts eines signifikanten Signalverlaufs eines Kollisionssignals, das ein Signal eines Sensors des Fahrzeuges repräsentiert; und

Bestimmen der Kollisionsgeschwindigkeit unter Verwendung des Zeitpunkts des signifikanten Signalverlaufs.

Bei dem Fahrzeug kann es sich um ein Kraftfahrzeug, beispielsweise einen Personenkraftwagen, einen Lastkraftwagen oder ein sonstiges Nutzfahrzeug handeln. Unter einer Kollision kann ein Aufprall oder ein Zusammenstoß des Fahrzeugs mit einem anderen Fahrzeug oder einem Kollisionspartner verstanden werden. Dabei kann der Kollisionspartner auch ein feststehendes Objekt, beispielsweise eine Wand oder ein Baum sein.

Unter einer Aufprall- oder Kollisionsgeschwindigkeit kann die Relativgeschwindigkeit zwischen den beiden Kollisionspartnern verstanden werden. Die Relativgeschwindigkeit kann die relative Annäherungsgeschwindigkeit zweier Objekte zum Zeitpunkt des Aufpralls bezeichnen. Die Kollisionsgeschwindigkeit kann zur Bestimmung der Kollisionsschwere, auch bezeichnet als Crashschwere, verwendet werden. Hierzu kann die Kollisionsgeschwindigkeit umgerechnet werden in eine zu einem Aufprall auf eine Wand äquivalente Geschwindigkeit, welche auch als barriereäquivalente Kollision, Equivalent Barrier Speed (EBS) oder Barrier Equivalent Velocity (BEV) bezeichnet werden kann. Die Equivalent Barrier Speed (EBS) ist ein aus der Unfallrekonstruktion bekanntes Maß für die Crashschwere. Dabei wird ein Fahrzeug-Fahrzeug Aufprall umgerechnet auf einen möglichst ähnlichen Aufprall eines Fahrzeugs gegen eine feststehende harte Wand (Barriere). Diese Normierung geschieht durch Ausmessen der Deformation und Abschätzung der Kollisionsenergie oder Crashenergie. Die barriereäquivalente Kollision ist die Geschwindigkeit des Barrierencrashes mit vergleichbarer Energie. Die barriereäquivalente Kollision kann definiert sein, als die durch das Massenverhältnis bestimmte Geschwindigkeit relativ zum (bewegten) Massenschwerpunkt beider Fahrzeuge. Es werden also aus den Eigengeschwindigkeiten der Fahrzeuge mit den jeweiligen Massen die barriereäquivalenten Geschwindigkeiten ausgerechnet. Dabei kann eine Annahme über das Massenverhältnis zwischen den Fahrzeugen getroffen werden.

Unter einem Kollisionssignal kann ein Signal eines Beschleunigungssensors oder ein Signal eines Körperschallsensors des Fahrzeuges verstanden werden. Unter einem signifikanten Signalverlauf kann ein charakteristischer Peak bzw. ein signifikanter Spitzenwert oder eine signifikante Signalverlaufsform des Signals des Sensors des Fahrzeugs, verstanden werden. Der signifikante Signalverlauf kann einem Ereignis in der Fahrzeugstruktur, wie Brechen oder Sprung in der Steifigkeit beim Übergang von nacheinander gelagerten Teilen, usw. zugeordnet werden. Diese Peaks treten immer dann auf, wenn ein gewisser Deformationsweg zurückgelegt wurde. Das Verfahren kann somit eine Schätzung der Kollisionsgeschwindigkeit umfassen, die wiederum auf einer Zuordnung eines oder mehrerer signifikanter Signalverläufe zu einem oder mehreren während des Kollisionsverlaufs auftretenden Ereignisses in der Fahrzeugstruktur basiert.

Ist der Sensor als ein Beschleunigungssensor ausgeführt, so kann das Kollisionssignal als ein Beschleunigungssignal von dem Beschleunigungssensor bereitgestellt werden. Dabei kann auf bereits verwendete Sensoren zurückgegriffen werden. So wird die Fahrzeugbeschleunigung im Allgemeinen mit zentral, z. B. im Airbagsteuergerät im Fahrzeug verbauten (Beschleunigungssensoren gemessen. Ein typischer Wertebereich ist $\pm100g$.

Vorteilhaft kann mit einer verbesserten Bestimmung der Kollisionsgeschwindigkeit eine verbesserte Aussage über die Kollisionsschwere getroffen werden und somit ein Insassenschutzsystem optimiert werden.

Im Schritt des Bestimmens kann die Kollisionsgeschwindigkeit unter Verwendung eines dem signifikanten Signalverlauf zugeordneten Deformations-Wert und einem Zeitraum zwischen einem der Kollision zugeordneten Referenzzeitpunkt und dem Zeitpunkt des signifikanten Signalverlaufs bestimmt werden. Unter einem Deformations-Wert kann ein Wert verstanden werden, der einem signifikanten Signalverlauf zugeordnet ist und eine Wegstrecke repräsentiert. Die Wegstrecke kann von einer Deformation des Fahrzeugs abhängig sein. Der Deformations-Wert kann anhand von Crashtestdaten bzw. Kollisionstestdaten bestimmt werden. Einem Deformations-Wert kann neben einem signifikanten Signalverlauf auch eine Geschwindigkeit zugeordnet werden. So kann eine genaue Bestimmung der Kollisionsgeschwindigkeit erleichtert werden.

Ferner kann das Verfahren einen Schritt des Bestimmens des Beginns der Kollision als den Referenzzeitpunkt, der einen Kollisionsbeginn repräsentiert, aufweisen. Unter einem Referenzzeitpunkt kann der Beginn der Kollision oder des Aufpralls verstanden werden. Unter einem Zeitraum zwischen einem der Kollision zugeordneten Referenzzeitpunkt und dem Zeitpunkt des signifikanten Signalverlaufs kann der Zeitraum vom Kollisionsbeginn bis zum Eintreten des signifikanten Signalverlaufs verstanden werden. Die Wahl des Kollisionsbeginns als Referenzzeitpunkt vereinfacht das Verfahren und die das Verfahren einsetzende Vorrichtung, da eine Erkennung eines Kollisionsbeginns bereits in einem AirbagSteuergerät als Standard-Algorithmus hinterlegt ist, und somit kein weiterer definierter Zeitpunkt bestimmt werden muss.

Im Schritt des Bestimmens kann eine Division zwischen dem Deformations-Wert und der Differenz aus dem der Kollision zugeordneten Referenzzeitpunkt und dem Zeitpunkt des signifikanten Signalverlaufs durchgeführt werden, um die Kollisionsgeschwindigkeit zu bestimmen. Eine solche Division kann mit einfachen Mitteln und sehr schnell durchgeführt werden.

Im Schritt des Ermittelns kann der signifikante Signalverlauf mittels eines amplituden- und steigungsabhängigen Filters und zusätzlich oder alternativ mittels eines Proportionaldiskriminators ermittelt werden. Ein Proportionaldiskriminator kann als ein Constant Fraction Discriminator bezeichnet werden. Ein Proportionaldiskriminator kann zur Erzeugung exakter Zeitmarken aus breiten Impulsen mit wechselnder Signalamplitude, aber konstanter Anstiegszeit, verwendet werden. Ein amplituden- und steigungsabhängiger Filter kann zur Erkennung von lokalen Maxima verwendet werden. Die beiden dargestellten Filter erlauben eine sichere Erkennung der für die Bestimmung der Kollisionsgeschwindigkeit verwendeten Signalverläufe.

Ferner kann im Schritt des Ermittelns mindestens ein weiterer Zeitpunkt eines weiteren signifikanten Signalverlaufs des Kollisionssignals ermittelt werden. Im Schritt des Bestimmens kann die Kollisionsgeschwindigkeit unter Verwendung des Zeitpunkts des signifikanten Signalverlaufs und des weiteren Zeitpunktes bestimmt werden. Durch die Ermittlung der Kollisionsgeschwindigkeit durch mindestens zwei signifikante Signalverläufe kann die Genauigkeit des Verfahrens erhöht werden.

In einer Ausführungsform der vorliegenden Erfindung kann die Kollisionsgeschwindigkeit ferner unter Verwendung eines Kollisionstyps bestimmt werden. Unter einem Kollisionstyp, auch als Crashtyp bezeichnet, kann die relative Ausrichtung der kollidierenden Fahrzeuge, z. B. senkrecht, versetzt, mit Aufprallwinkel, Full Frontal (FF), Offset Deformable Barrier (ODB) usw., verstanden werden. Der Deformations-Wert kann am besten für einzelne Crashtypen getrennt bestimmt werden.

Ferner kann das Verfahren einen Schritt des Plausibilisierens einer Relativgeschwindigkeit unter Verwendung der Kollisionsgeschwindigkeit aufweisen, wobei die Relativgeschwindigkeit einen eine Geschwindigkeit des Fahrzeugs relativ zu einem Kollisionsobjekt repräsentierenden Wert eines Relativgeschwindigkeitssensors repräsentiert. Die Relativgeschwindigkeit kann von einem Relativgeschwindigkeitssensor des Fahrzeugs bereitgestellt werden. Unter einem Relativgeschwindigkeitssensor kann ein vorausschauender Sensor verstanden werden, wie beispielsweise ein Radar-, Lidar- oder möglicherweise zukünftig Videosensor über dem Kühler, in den Scheinwerfern oder hinter der Frontscheibe verbaut und nach vorn gerichtet. Ein Relativgeschwindigkeitssensor liefert eine Geschwindigkeit, beispielsweise über den CAN-Bus, typischerweise alle 10ms bis 100ms. Je nach Typ gibt es einen Blindbereich vor dem Fahrzeug und eine maximale Reichweite, die das Sichtfeld einschränken. Vorausschauende Sensorik unterliegt technologiebedingten Schwächen, die zu falschen Geschwindigkeitsschätzungen führen können. Vorausschauende Sensoren werden beeinflusst durch Witterungsabhängigkeit, insbesondere Schnee und Regen, Fehler bei der Zielobjektauswahl, Erkennen von Geisterobjekten, Ortung von ausgedehnten Objekten, Erfassen sehr schneller Bewegungsänderungen insbesondere Notbremsungen vor dem Aufprall usw. Die Plausibilisierung der Relativgeschwindigkeit des Relativgeschwindigkeitssensors erlaubt, diese Geschwindigkeit mit einer höheren Gewichtung in einem Algorithmus zur Auslösung des Insassenschutzsystems zu verwenden.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:

Fig. 1 ein Fahrzeug mit einer Vorrichtung zur Bestimmung der Kollisionsgeschwindigkeit gemäß einem Ausführungsbeispiel der vorliegenden Erfindung;

Fig. 2 ein Ablaufdiagramm eines Ausführungsbeispiels der vorliegenden Erfindung;

Fig. 3 eine bildliche Darstellung von zwei Fahrzeugen in einem Koordinatensystem;

Fig. 4 eine grafische Darstellung des Zusammenhangs zwischen eigener Geschwindigkeit, Relativgeschwindigkeit und Kollisionsobjektgeschwindigkeit in einem kartesischen Koordinatensystem;

Fig. 5 eine grafische Darstellung der Relativgeschwindigkeit unter Betrachtung der Massen;

Fig. 6 eine grafische Darstellung der Relativgeschwindigkeit unter Betrachtung eines stehenden Fahrzeugs als Kollisionsobjekt;

Fig. 7 eine grafische Darstellung der Relativgeschwindigkeit unter Betrachtung eines stehenden Fahrzeugs als Kollisionsobjekt im Vergleich zu einer stehenden Barriere mit theoretisch unendlicher Masse;

Fig. 8 ein Zusammenhang zwischen einem signifikanten Signalverlauf in einem Beschleunigungssignal und die dazugehörende Deformation eines Fahrzeugs;

Fig. 9 ein Zusammenhang zwischen einem signifikanten Signalverlauf in einem Beschleunigungssignal und die dazugehörende Deformation eines Fahrzeugs;

Fig. 10 ein amplituden- und steigungsabhängiger Spitzenfilterfilter;

Fig. 11 Spitzenerkennung mittels Proportionaldiskriminator;

Fig 12 ein Beispiel detektierter Signalspitzen und Geschwindigkeitsberechnung unter Verwendung der exakten Deformation;

Fig. 13 für verschiedene Crash-Versuche die berechnete Kollisionsgeschwindigkeit über die Anzahl der Signalspitzen, respektive der zugeordneten Ereignisse;

Fig. 14, 15a bis 15c zeigen eine Möglichkeit zur Eingrenzung der relevanten gewünschten Signalspitzen über die Deformation;

Fig. 16 ein Ablaufdiagramm der erfindungsgemäßen Lösung mit Plausibilitätskontrolle;

Fig. 17 ein Ablaufdiagramm der erfindungsgemäßen Lösung mit Plausibilitätskontrolle durch einen Relativgeschwindigkeitssensor;

Fig. 18 Trainingsdatensätze für eine Frontalkollision für eine indirekte Plausibilisierung der Relativgeschwindigkeit ohne explizite Berechnung einer Vergleichsgeschwindigkeit;

Fig. 19 Trainingsdatensätze für eine Offset-Kollision gegen eine feststehende deformierbare Barriere;

Fig. 20 Auswahl einer Referenzkurve für die Ableitung der Geschwindigkeit, dargestellt über die Zeit;

Fig. 21 Auswahl einer Referenzkurve für die Ableitung der Geschwindigkeit, dargestellt über die Deformation;

Fig. 22 Auswahl einer Referenzkurve für die Ableitung der Geschwindigkeit, dargestellt über die Deformation;

Fig. 23 Architektur des erfindungsgemäßen Verfahrens; und

Fig. 24 Einbettung der Kollisionsgeschwindigkeitsbestimmung gemäß des erfindungsgemäßen Verfahrens in einen Airbag-Algorithmus.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

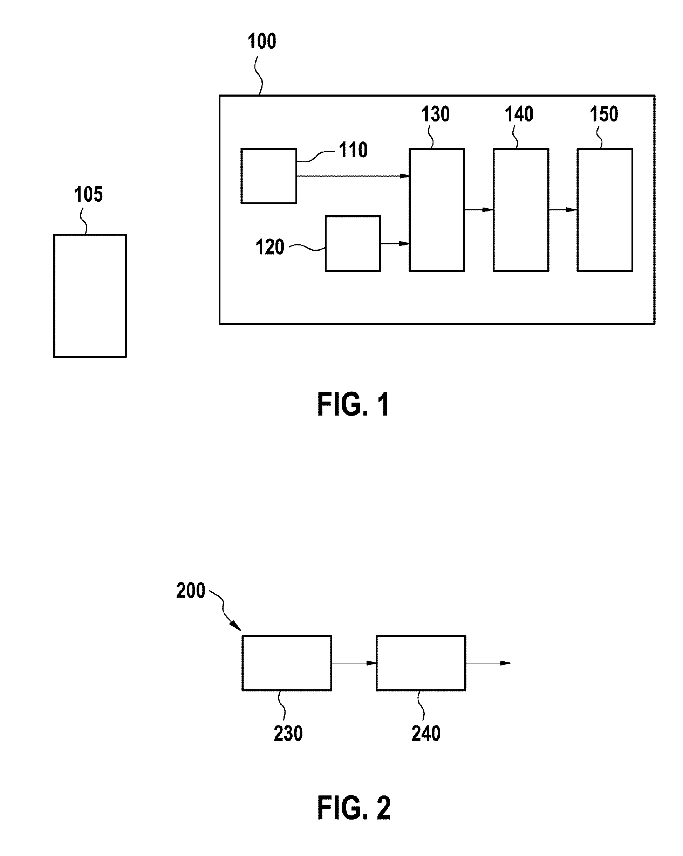

Fig. 1 zeigt eine schematische Darstellung eines Fahrzeugs 100 mit einer Vorrichtung zur Bestimmung einer Kollisionsgeschwindigkeit gemäß einem Ausführungsbeispiel der vorliegenden Erfindung. Das Fahrzeug 100 bewegt sich auf ein Kollisionsobjekt 105 zu und wird nachfolgend mit dem Kollisionsobjekt 105 kollidieren. In dem in Fig.1 dargestellten Ausführungsbeispiel ist eine Kollision zwischen dem Fahrzeug 100 und dem Kollisionsobjekt 105 auf der in Fahrtrichtung linken Hälfte der Fahrzeugfrontseite zu erwarten. Die zu bestimmende Kollisionsgeschwindigkeit bezieht sich auf die Kollision zwischen dem Fahrzeug 100 und dem Kollisionsobjekt 105.

Das Fahrzeug 100 weist einen Sensor 110 und einen Relativgeschwindigkeitssensor 120 auf. Der Sensor 110 ist ausgebildet, um ein Kollisionssignal bereitzustellen. Der Relativgeschwindigkeitssensor 120 ist ausgebildet, um eine Relativgeschwindigkeit, hier zwischen dem Fahrzeug 100 und dem Kollisionsobjekt 105, zu bestimmen. Der Relativgeschwindigkeitssensor 120 kann auch als Umfeldsensorik 120 oder als vorausschauende Sensorik 120 bezeichnet werden. Der Relativgeschwindigkeitssensor 120 ist optional, d. h., die Relativgeschwindigkeit wird nicht zur Bestimmung der Kollisionsgeschwindigkeit benötigt. Eine Vorrichtung zum Ermitteln 130 ist ausgebildet, ein Kollisionssignal von dem Sensor 110 und die Relativgeschwindigkeit von dem Relativgeschwindigkeitssensor 120 zu empfangen. Ansprechend auf einen Beginn der Kollision zwischen dem Fahrzeug 100 und dem Kollisionsobjekt 105 verändert sich ein Verlauf des Kollisionssignals. Die Vorrichtung zum Ermitteln 130 ist ausgebildet, um einen Zeitpunkt eines signifikanten Signalverlaufs des Kollisionssignals zu ermitteln. Gemäß einem Ausführungsbeispiel ist die Vorrichtung zum Ermitteln 130 ausgebildet, um den signifikanten Signalverlauf mittels eines amplituden- und steigungsabhängigen Peakfilters und/oder mittels eines Proportionaldiskriminators zu ermitteln. Der Ausgang der Vorrichtung zum Ermitteln 130 ist mit dem Eingang einer Vorrichtung zum Bestimmen 140 verbunden. Die Vorrichtung zum Bestimmen 140 ist ausgebildet, um den Zeitpunkt des signifikanten Signalverlaufs zu empfangen. Die Vorrichtung zum Bestimmen 140 ist ausgebildet, um eine Kollisionsgeschwindigkeit unter Verwendung des Zeitpunktes des signifikanten Signalverlaufs zu bestimmen. Die Vorrichtung zum Bestimmen 140 ist ausgebildet, um die Kollisionsgeschwindigkeit auszugeben. Eine Insassenschutzvorrichtung 150 oder eine Auslöseelektronik der Insassenschutzvorrichtung 150 ist ausgebildet, um die Kollisionsgeschwindigkeit zu empfangen und zum Treffen einer Auslöseentscheidung zu verwenden.

In einem Ausführungsbeispiel ist der Relativgeschwindigkeitssensor 120 als eine Umfeldsensorik 120 ausgeführt und ausgebildet, um das Kollisionsobjekt 105 zu erkennen. Die Kollisionsgeschwindigkeit kann zur Absicherung der von dem Relativgeschwindigkeitssensor 120 bestimmten Relativgeschwindigkeit eingesetzt werden, oder umgekehrt.

In einem Ausführungsbeispiel ist der Sensor 110 ausgebildet, um Beschleunigungswerte zu erfassen und ein Beschleunigungssignal als das Kollisionssignal auszugeben. In einem weiteren Ausführungsbeispiel ist der Sensor 110 ausgebildet, um Körperschall zu erfassen und ein Körperschallsignal als das Kollisionssignal auszugeben. In einem Ausführungsbeispiel ist mehr als ein Sensor 110 im Fahrzeug 100 integriert. Durch die Auswertung der Kollisionssignale, beispielsweise in Form von Beschleunigungswerten, von mindestens zwei Sensoren 110 kann nicht nur ein Aufprall detektiert werden, sondern durch Betrachtung auch des zeitlichen Verhaltens, bzw. eines zeitlichen Versatzes zwischen den Kollisionssignalen der Sensoren 110 auch ein Information über den Aufprallort relativ zum Einbauort der Sensoren 110 gewonnen werden. Darüber hinaus lassen sich mittels mathematischer Berechnungen weitere Kollisionswerte bestimmen, wie Deformationsgeschwindigkeit, Eindringinformation oder Größe des Kollisionspunktes bzw. Aufprallpunktes.

Die Detektion der Kollisionsschwere, auch als Crashschwere bezeichnet, in frontalen Fahrzeugaufprallunfällen ist eine wichtige Voraussetzung zur sicheren Aktivierung von Insassenschutzsystemen 150 oder Rückhaltemitteln 150, wie Airbags und Gurtstraffern, in kritischen Unfällen. In einem Frontaufprall wird das aufprallende Fahrzeug 100 mit starken Kräften abgebremst. Gurtstraffer und Airbags dienen dabei einer möglichst verträglichen Abbremsung des aufgrund seiner Trägheit nach vorn geschleuderten Insassen. Die möglichst verträgliche Abbremsung wird bei einem Gurtstraffer beispielsweise über die Bindung des Insassen an den Sitz und damit eine Kopplung des Insassen an das verzögerte Fahrzeug 100 erreicht. Die Aktivierung der Rückhaltemittel 150 geschieht adaptiv, da eine der Unfallschwere unangemessene rückhaltende Kraft unter Umständen schädlich auf den Insassen wirkt, in jedem Fall aber ungerechtfertigt Reparaturkosten verursacht.

Wesentliche Größen zur Beurteilung der Kollisionsschwere sind die Kollisionsgeschwindigkeit, die Massen und Steifigkeiten der Kollisionspartner 100, 105, sowie der Kollisionstyp oder Crashtyp (relative Ausrichtung der kollidierenden Fahrzeuge 100, 105: z. B. senkrecht, versetzt, mit Aufprallwinkel usw.). Die relevanten Massen und Steifigkeiten können statistisch eingegrenzt werden, das heißt, dass in der Regel vergleichbare Fahrzeuge 100, 105 miteinander kollidieren, bzw. ein Fahrzeug 100 auf ein feststehendes Objekt 105 sehr hoher Masse, wie eine Wand oder einen Baum trifft. Zu leichte oder weiche Objekte können ignoriert werden. Deshalb ist die Aufprallgeschwindigkeit oder Kollisionsgeschwindigkeit als Haupteinflussgröße auf die Kollisionsschwere anzusehen.

Eine Schätzung der Kollisionsschwere kann mit im Fahrzeug 100 verbauten Beschleunigungssensoren 110 und dem daraus berechneten Geschwindigkeitsabbau erfolgen. Die Rückhaltemittel 150 sind dabei je nach Kollisionsschwere in den ersten 10 ms bis 50 ms zu zünden und entfalten ihre Schutzwirkung nach weiteren etwa 30 ms, welche zum Aufblasen der Airbags benötigt werden.

Um die Aufprallgeschwindigkeit, und damit die Kollisionsschwere besser zu bestimmen, kommen verstärkt vorausschauende Sensoren 120 wie Radar, Laser und Video, zum Einsatz, die die Relativgeschwindigkeit direkt messen.

Gemäß einem Ausführungsbeispiel der vorliegenden Erfindung wird zusätzlich oder alternativ zu einer Schätzung der Kollisionsschwere über einen berechneten Geschwindigkeitsabbau eine explizite Geschwindigkeitsschätzung basierend auf einem Signal zumindest eines Beschleunigungssensors 110 durchgeführt. Dies ermöglicht die Bestimmung Verwendung der Kollisionsgeschwindigkeit auch in Fahrzeugen 100 ohne vorausschauenden Relativgeschwindigkeitssensor 120, bzw. vorausschauende Sensorik 120.

Ist ein Relativgeschwindigkeitssensor 120 vorhanden, kann die beschleunigungsbasierte Geschwindigkeitsschätzung der Kollisionsgeschwindigkeit mit der gemessenen Relativgeschwindigkeit verglichen werden, um die gemessene Relativgeschwindigkeit vor der Verwendung im Kollisionsschwerealgorithmus zu prüfen und bei Abweichung zu verwerfen (Sensor-Plausibilität). Alternativ kann eine indirekte Plausibilisierung der gemessenen Relativgeschwindigkeit durchgeführt werden.

Durch die Bestimmung der Kollisionsgeschwindigkeit basierend auf einem signifikanten Signalverlauf des Kollisionssignals des Sensors 110, wird eine genauere Messung oder Bestimmung der Kollisionsgeschwindigkeit möglich. Dies führt zu höherer Performance und Robustheit der bisherigen Anwendung der Aufprallgeschwindigkeit in der Crashschwereerkennung und erschließt eventuell weitere Anwendungen.

Fig. 2 zeigt ein Ablaufdiagramm eines Verfahrens 200 zur Bestimmung einer Kollisionsgeschwindigkeit gemäß einem Ausführungsbeispiel der vorliegenden Erfindung. Das Verfahren 200 kann beispielsweise genutzt werden, um bei einer Kollision die Kollisionsgeschwindigkeit, beispielsweise basierend auf einem Kollisionssignal des in Fig. 1 gezeigten Sensors zu bestimmen und alternativ oder zusätzlich eine Plausibilisierung der in Fig. 1 gezeigten vorausschauenden Sensorik 120 durchzuführen. Die vom Verfahren 200 bestimmte Kollisionsgeschwindigkeit oder die von einem Relativgeschwindigkeitssensor bestimmte und mithilfe des Verfahrens 200 plausibilisierte Kollisionsgeschwindigkeit kann an ein Insassenschutzsystem übermittelt werden und dort in einen Algorithmus zur Kollisionsschwere-Ermittlung verwendet werden.

Das Verfahren 200 umfasst einen Schritt 230 des Ermittelns und einen Schritt 240 des Bestimmens. Im Schritt 230 des Ermittelns wird aus einem Kollisionssignal ein Zeitpunkt eines signifikanten Signalverlaufs ermittelt. Der signifikante Signalverlauf kann in einem Ausführungsbeispiel auch ein charakteristisches Maximum oder ein charakteristischer Peak sein. Im Schritt 240 des Bestimmens wird eine Kollisionsgeschwindigkeit unter Verwendung des Zeitpunkts des signifikanten Signalverlaufs bestimmt. In einem Ausführungsbeispiel wird die Kollisionsgeschwindigkeit auch unter Verwendung eines dem signifikanten Signalverlauf zugeordneten Deformations-Wertes und einem Zeitintervall zwischen dem Zeitpunkt des signifikanten Signalverlaufs und einem Referenzzeitpunkt bestimmt, wobei der Referenzzeitpunkt in einem Ausführungsbeispiel der Kollisionsbeginn ist. Die Kollisionsgeschwindigkeit wird dann in einem Ausführungsbeispiel als Division des Deformationswertes durch das Zeitintervall berechnet.

Wenn in einem weiteren Ausführungsbeispiel mindestens ein weiterer signifikanter Signalverlauf bestimmt wird, so kann durch die Berechnung der Kollisionsgeschwindigkeit mittels des weiteren signifikanten Signalverlauf und dem zugeordneten Deformations-Wert und dem weiteren Zeitintervall die erste Kollisionsgeschwindigkeit validiert werden oder alternativ durch eine Mittelwertbildung über die bestimmten Kollisionsgeschwindigkeiten das Verfahren robuster gestaltet werden.

In einem in Fig. 2 nicht dargestellten Ausführungsbeispiel weist das Verfahren 200 einen weiteren Schritt der Plausibilisierung auf, in welchem mittels der Kollisionsgeschwindigkeit die Relativgeschwindigkeit des Relativgeschwindigkeitssensors 120 validiert wird.

Das erfindungsgemäße Verfahren ermöglicht zum einen eine explizite Geschwindigkeitsbestimmungsschätzung mittels Sensordaten, wie z. B. Beschleunigungsdaten. Des weiteren ermöglicht das Verfahren eine Verifikation bzw. Plausibilisierung, eines Relativgeschwindigkeitssensors, entweder durch einen Vergleich der Bestimmung der Kollisionsgeschwindigkeit mit der Relativgeschwindigkeit des Relativgeschwindigkeitssensors oder durch eine indirekte Plausibilisierung der Relativgeschwindigkeit ohne explizite Berechnung einer Vergleichsgeschwindigkeit.

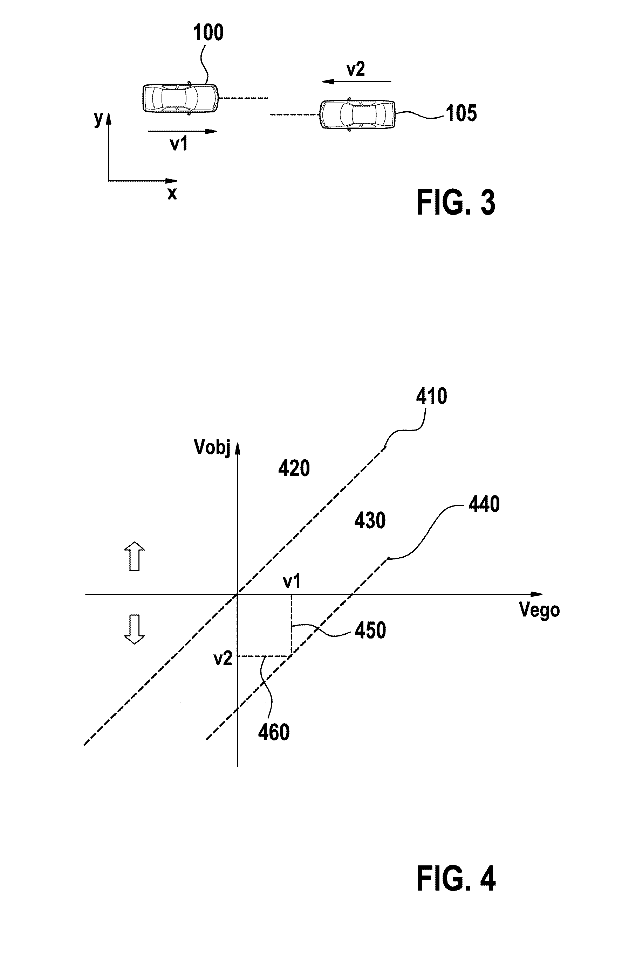

Fig. 3 zeigt eine bildliche Darstellung von zwei Fahrzeugen 100, 105 in einem Koordinatensystem gemäß einem Ausführungsbeispiel der vorliegenden Erfindung. Das Koordinatensystem in Fig. 3 bildet das globale Koordinatensystem, oder Weltkoordinatensystem für die folgenden Figuren. Es ist einkartesisches Koordinatensystem mit x auf der Abszisse und y auf der Ordinate dargestellt. Die Bewegungsrichtung $V_1$ des Ego-Fahrzeugs 100 ist in Richtung von x, die Bewegungsrichtung $V_2$ von dem Fremd-Fahrzeug 105 ist entgegengesetzt zu $V_1$ bzw. dem Fahrzeug 100. Das Fahrzeug 100 weist eine bekannte Masse $m_1$ auf.

Fig. 4 zeigt eine grafische Darstellung des Zusammenhangs zwischen eigener Geschwindigkeit $V_{ego}$, Relativgeschwindigkeit $V_{rel}$ und Kollisionsobjektgeschwindigkeit $V_{obj}$ in einem kartesischen Koordinatensystem gemäß einem Ausführungsbeispiel der vorliegenden Erfindung. Die Relativgeschwindigkeit $V_{rel}$ ist die relative Annäherungsgeschwindigkeit zwischen einem Fahrzeug und einem Objekt oder zwischen zwei Fahrzeugen zum Zeitpunkt des Aufpralls, also beispielsweise die relative Annäherungsgeschwindigkeit der zwei in Fig. 3 gezeigten Fahrzeuge 100, 105. Auf der Abszisse ist die Geschwindigkeit eines $V_{ego}$ Fahrzeugs aufgetragen, in dem im Folgenden die Kollisionsgeschwindigkeit bestimmt wird. Auf der Ordinate ist die Geschwindigkeit $V_{obj}$ des Kollisionsobjekts aufgetragen, mit dem das Fahrzeug kollidiert. Im Bereich oberhalb der Abszisse sind die beiden Kollisionspartner in ihrer Fahrtrichtung gleich orientiert, im Bereich unterhalb der Abszisse sind die beiden Kollisionspartner in ihrer Fahrtrichtung voneinander wegweisend orientiert.

Eine Gerade 410 durch den Ursprung des Koordinatensystems schneidet den ersten und dritten Quadranten in einem Winkel von 45°. Durch die Gerade 410 wird der Raum in einen nicht kritischen Bereich 420 und in einem kritischen Bereich 430 geteilt. Parallel zur Geraden 410 läuft im kritischen Bereich 430 eine Gerade 440, welche die Relativgeschwindigkeit $V_{rel}$ repräsentiert. Die Gerade 440 der Relativgeschwindigkeit $V_{rel}$ schneidet die Abszisse in einem Winkel von 45° und weist eine positive Steigung auf. Auf der Abszisse ist im Bereich zwischen dem Ursprung und dem Schnittpunkt der Geraden 440 der Relativgeschwindigkeit die Geschwindigkeit $V_1$ des Fahrzeugs 100 dargestellt. In dem in Fig. 4 dargestellten Ausführungsbeispiel beträgt die Geschwindigkeit $V_1$ des Fahrzeugs 100 ca. die Hälfte der Relativgeschwindigkeit der beiden Fahrzeuge 100,105 zueinander. Die Geschwindigkeit $V_1$ ist ca. in der Mitte zwischen dem Ursprung des Koordinatensystems und dem Schnittpunkt der Geraden 440 mit der Abszisse aufgetragen. Die Projektion der Geschwindigkeit $V_1$ senkrecht zur Abszisse auf die Gerade 440 der Relativgeschwindigkeit $V_{rel}$ wird durch eine Gerade 450 dargestellt. Durch den Schnittpunkt der Geraden 450 mit der Geraden 440 der Relativgeschwindigkeit $V_{rel}$ verläuft eine senkrecht zur Koordinate stehende Gerade 460, welche im Schnittpunkt mit der Ordinate die Geschwindigkeit $V_2$ auf der Ordinate anzeigt.

Das Koordinatensystem in Fig. 4 kann zwei Sonderfälle darstellen: Wenn eine Geschwindigkeiten $V_{ego}$ oder $V_{rel}$ im Ursprung des Koordinatensystems liegt, so steht das betreffende Objekt. Das heißt, wenn $V_{obj} = 0$, dann steht das Kollisionsobjekt 105, und wenn $V_{rel} = 0$, dann steht das Fahrzeug 100. Wenn die Gerade 440, welche die Relativgeschwindigkeit $V_{rel}$ repräsentiert, durch den Ursprung des Koordinatensystems verläuft und somit deckungsgleich mit der Geraden 410 ist, so beträgt die Relativgeschwindigkeit $V_{rel} = 0$, d. h. die beiden Fahrzeuge 100, 105 weisen identische Geschwindigkeiten auf. Die Relativgeschwindigkeit $V_{rel}$ ist gleich der Geschwindigkeit des Fahrzeugs 100 minus der Geschwindigkeit des Kollisionsobjekts 105, bzw. Fahrzeugs 105.

Dem anhand von Fig. 2 beschriebenen Verfahren 200 kann die Geschwindigkeit $V_1$ des Ego-Fahrzeugs als Eingangsgröße zur Verfügung gestellt werden, sodass die Relativgeschwindigkeit $V_{rel}$ des Fahrzeugs 100 zum Fremd-Fahrzeug , bzw. Kollisionsobjekt bestimmt werden kann. Unter Verwendung der Geschwindigkeit $V_1$ und der Relativgeschwindigkeit $V_{rel}$ kann wie in Fig. 4 dargestellt die Geschwindigkeit $V_2$ ermittelt werden.

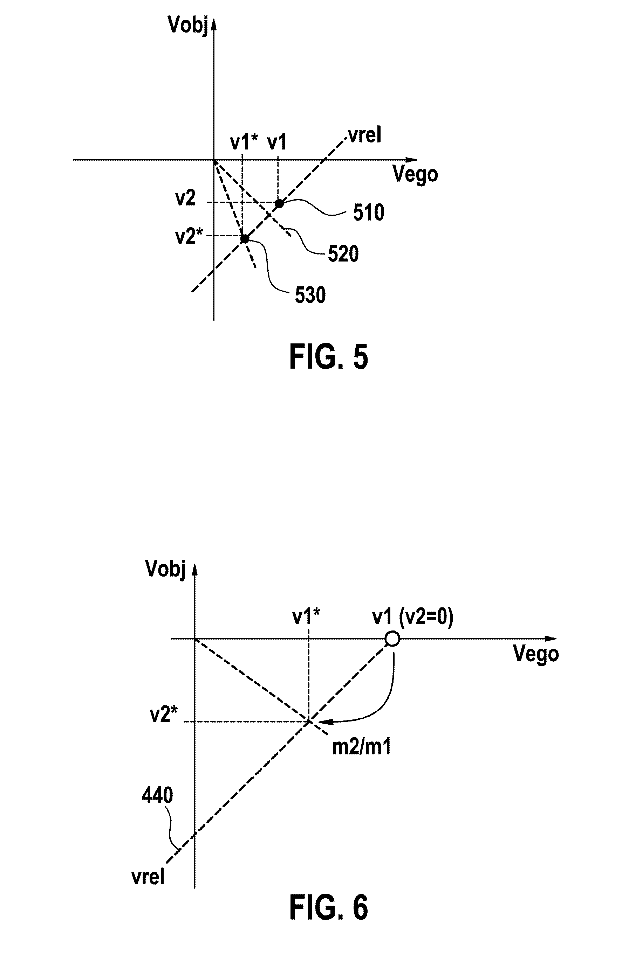

Fig. 5 zeigt eine grafische Darstellung der Relativgeschwindigkeit unter Betrachtung der Massen m1, m2 der in Fig. 3 gezeigten Fahrzeuge 100, 105 gemäß einem Ausführungsbeispiel der vorliegenden Erfindung. In einem kartesischen Koordinatensystem ist analog zu Fig. 4 die Geschwindigkeit $V_1$, Relativgeschwindigkeit $V_{rel}$ und Kollisionsobjektgeschwindigkeit $V_2$ dargestellt. Der Projektionspunkt 510 der Geschwindigkeit $V_1$ auf der Geraden $V_{rel}$ ergibt die Geschwindigkeit $V_2$ des Kollisionsobjekts. Die Gerade 520 zeigt einen Sonderfall derart, dass die Masse m1 des Ego-Fahrzeugs gleich der Masse m2 des Kollisionsobjekts oder Fremd-Fahrzeugs ist. Die Geschwindigkeit $V_1$ und die Relativgeschwindigkeit $V_{rel}$ können direkt gemessen werden oder zumindest bestimmt werden. Auch die Masse m1 des Ego-Fahrzeugs ist bekannt. Die Geschwindigkeit $V_2$ lässt sich aus den bekannten Größen ermitteln. Die Masse m2 des Fremd-Fahrzeugs sowie die beiden zu einem Aufprall auf eine Wand äquivalenten Geschwindigkeiten V1*, V2*, welche auch als barriereäquivalente Kollision, Equivalent Barrier Speed (EBS) oder Barrier Equivalent Velocity (BEV) bezeichnet werden kann, sind unbekannt. Im System des Massenzentrums gilt folgender Zusammenhang:

$$m1v1^* + m2v2^* = (m1+m2)V_{end} = 0,$$

sowie

$$V_{rel}(v_1,v_2) = V_{rel}(v1^*,v2^*).$$

Hierbei steht m1v1* für eine Impulsreflexion gegen das Ego-Fahrzeug, was äquivalent zu einer Reflexion gegen eine stehende Wand ist.

Wenn eine Information über die Geschwindigkeit in den Kollisionsdaten, bzw. Crashdaten, enthalten ist, dann ist dies mit größter Wahrscheinlichkeit v1* anstelle von $v_1$. Ein angemessenes Masseverhältnis kann folgendermaßen definiert werden. Das Verhältnis der Masse m2 des Kollisionsobjekts zur Masse m1 des Ego-Fahrzeugs beträgt zwischen der Hälfte und dem doppelten des Gewichts des Ego-Fahrzeugs 100. Hieraus folgt, das v1* zwischen einem Drittel und zwei Drittel der Relativgeschwindigkeit $V_{rel}$ beträgt:

$$v1^* = 1/3\, V_{rel} \ldots 2/3\, V_{rel}.$$

Durch eine Verschiebung des Projektionspunktes auf der die Relativgeschwindigkeit repräsentierenden Geraden lassen sich die Barriere äquivalenten Geschwindigkeiten v1*, v2* bestimmen. Dabei muss eine Annahme über das Massenverhältnis getroffen werden. Der Projektionspunkt 530 entspricht der Forderung v1* = -(m2/m1)v2* unter der Annahme des Massenverhältnisses.

Fig. 6 zeigt eine grafische Darstellung der Relativgeschwindigkeit unter Betrachtung eines stehenden Fremd-Fahrzeugs als Kollisionsobjekt gemäß einem Ausführungsbeispiel der vorliegenden Erfindung. In einem kartesischen Koordinatensystem ist analog zu Fig. 4 und Fig. 5 die Geschwindigkeit $V_1$, Relativgeschwindigkeit $V_{rel}$ und Kollisionsobjektgeschwindigkeit $V_2$ dargestellt. In dem hier dargestellten Sonderfall ist die Relativgeschwindigkeit $V_{rel}$ gleich der Geschwindigkeit $V_1$ des Ego-Fahrzeugs. Hieraus ergibt sich, dass die Geschwindigkeit $V_2$ des Kollisionsobjekts null betragen muss, d. h. $V_1 = V_{rel}$; $V_2 = 0$. Unter Betrachtung des Massenverhältnisses m2/m1 verschiebt sich die auf der Geraden 440 dargestellte Relativgeschwindigkeit $V_{rel}$ in Richtung der Ordinate. Bei einem korrekt gewählten Massenverhältnis m2/m1 können aus der Darstellung in Fig. 6 die für eine barriereäquivalente Kollision relevanten Geschwindigkeiten v1*, v2* ermittelt werden.

Eine Erkennung stehender Objekte ist durch den Vergleich der Eigengeschwindigkeit, z. B. Tacho- oder ESP-Geschwindigkeit, welche über entsprechende Sensoren, bzw. Steuergeräte im Fahrzeug bekannt sind, mit der Relativgeschwindigkeit, welche der Relativgeschwindigkeitssensor liefert, möglich. Sind beide Geschwindigkeiten annähernd gleich, steht das Kollisionsobjekt ($V_{obj}=0$) und es kann alternativ das Massenverhältnis m2=unendlich verwendet werden. In diesem Fall wird EBS:=$V_{rel}$=$V_{ego}$ gesetzt, da es sich bereits um einen Barrierencrash handelt. Dieses Vorgehen würde Unfälle mit fest verankerten stehenden Objekten, wie einem Haus oder einem Baum, richtig bewerten. Stehende, geparkte Fahrzeuge allerdings nicht. Wird auch im Fall stehender Objekte eine Umrechnung auf eine barriereäquivalente Kollision (EBS) durchgeführt, werden stehende Fahrzeuge richtig bewertet. Diese Frage ist aus Sensoriksicht unentscheidbar und kann nur statistisch entschieden werden.

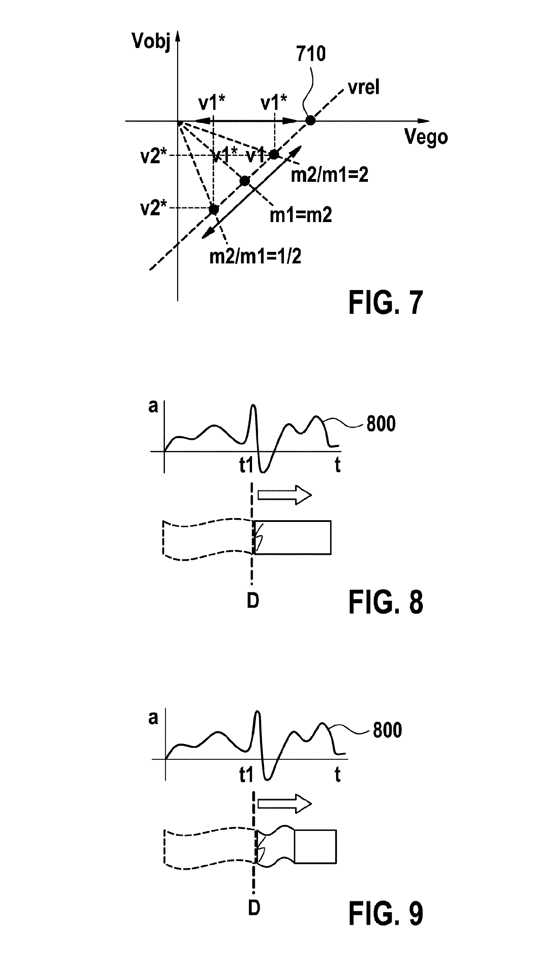

Fig. 7 zeigt eine grafische Darstellung der Relativgeschwindigkeit unter Betrachtung eines stehenden Fahrzeugs als Kollisionsobjekt im Vergleich zu einer stehenden Barriere mit theoretisch unendlicher Masse gemäß einem Ausführungsbeispiel der vorliegenden Erfindung. In einem kartesischen Koordinatensystem ist auf der Abszisse die Geschwindigkeit $V_{ego}$ eines Ego-Fahrzeugs dargestellt. Die Relativgeschwindigkeit entspricht der Geschwindigkeit $V_{ego}$ bzw. $V_1$. Eine die Relativgeschwindigkeit repräsentierende Gerade $V_{rel}$ schneidet die Abszisse in einem Winkel von 45° im Punkt 710, welcher die Relativgeschwindigkeit und die Geschwindigkeit $V_1$ repräsentiert. Bei Annahme einer unendlichen Masse m2 entspricht der Punkt 710 auch v1*. Eine unendliche Masse kann für ein verankertes, festes Kollisionsobjekt angenommen werden, d. h. kein stehendes Auto. Bei einem stehenden Auto verschiebt sich der Projektionspunkt für v1* und v2* entsprechend auf der Geraden $V_{rel}$. In Fig. 7 sind drei charakteristische Punkte für das Massenverhältnis m2/m1, die der gleichen, der halben und der doppelten Masse des Ego-Fahrzeugs entsprechen. Dies zeigt deutlich die Verschiebung des Projektionspunktes entlang der Geraden $V_{rel}$, dabei entspricht eine Verschiebung entlang der positiven Steigungsrichtung der geraden eine Zunahme des Massenverhältnisses m2/m1, d. h. das Kollisionsobjekt wird im Verhältnis zum Ego-Fahrzeug schwerer.

Fig. 8 zeigt einen Zusammenhang zwischen einem signifikanten Signalverlauf in einem Kollisionssignal 800 und die dazugehörende Deformation eines Fahrzeugs gemäß einem Ausführungsbeispiel der vorliegenden Erfindung. In dem oberen Diagramm ist in einem kartesischen Koordinatensystem der Signalverlauf des Kollisionssignals 800 eines Sensors dargestellt. Das Kollisionssignal 800 kann beispielsweise von dem in Fig. 1 gezeigten Sensor 110 bereitgestellt werden.

Der Signalverlauf kann in einem Ausführungsbeispiel den Signalverlauf eines Beschleunigungssensors darstellen. Dann weist das Verfahren einen Schritt des Einlesens von mindestens einem Beschleunigungssignal als das Kollisionssignal 800, das ein Signal eines Beschleunigungssensors des Fahrzeuges repräsentiert, auf.

Entsprechend kann der Signalverlauf in einem weiteren Ausführungsbeispiel den Signalverlauf eines Körperschallsensors darstellen. Dann weist das erfindungsgemäße Verfahren einen Schritt des Einlesens von mindestens einem Körperschallsignal als das Kollisionssignal 800, das ein Signal eines Körperschallsensors des Fahrzeuges repräsentiert, auf.

Gemäß dem gezeigten Ausführungsbeispiel ist auf der Abszisse die Zeit t dargestellt und auf der Ordinate die Beschleunigung a. Im Signalverlauf 800 ist zum Zeitpunkt t1 ein signifikanter Signalverlauf zu erkennen, hier ein signifikantes Maximum, auch bezeichnet als ein charakteristischer Peak, , gefolgt von einem signifikanten Minimum. Unterhalb des kartesischen Koordinatensystems ist eine Deformation des Fahrzeugs, beispielsweise des in Fig. 1 gezeigten Fahrzeugs 100 dargestellt. Zum Zeitpunkt t1 ist ein Ereignis in der Fahrzeugstruktur dargestellt. Die Bewegungsrichtung des Fahrzeuges ist entgegen der Zeitachse, bzw. die Bewegungsrichtung der Deformation ist entlang der Zeitachse.

Die Bestimmung der Geschwindigkeit mittels Beschleunigungsdaten erfolgt durch Zuordnung charakteristischer Peaks bzw. Signalverläufe, im Beschleunigungssignal 800 zu Ereignissen in der Fahrzeugstruktur wie Brechen, Sprung in der Steifigkeit beim Übergang von nacheinander gelagerten Teilen, usw. Diese Peaks treten immer dann auf, wenn ein gewisser Deformationsweg zurückgelegt wurde. Im einfachsten Fall entspricht der örtliche Ursprung des Peaks in der Struktur genau diesem Deformationsweg. Der Peak kann der Deformation D zugeordnet werden.

Die Geschwindigkeit ergibt sich dann aus D geteilt durch die bis zum Eintreten des Peaks gemessene Zeit. D lässt sich anhand von Crashtestdaten bestimmen, da für diese Daten die Geschwindigkeit bekannt ist. Die Deformation ist:

$$\text{Deform}(T)=V1^*.T - T0\int\int T\, a(t)dt$$

Und am Peak: $D=\text{Deform}(T_{peak})$

Kenntnis von D liefert einen Schätzwert für die barriereäquivalente KollisionsGeschwindigkeit :

$$V1^*:=D/T_{peak}$$

Insbesondere ist also eine Crashstart-Erkennung $T_0$ nötig. Der Zeitpunkt $T_0$ des Beginns der Kollision kann beispielsweise von einem Standard-Algorithmus im Airbagsteuergerät geliefert werden.

Tpeak ist dann $T - T_0$, falls zum Zeitpunkt T ein signifikanter Peak im Beschleunigungssignal erkannt wurde.

Fig. 9 zeigt analog zu Fig. 8 einen Zusammenhang zwischen einem signifikanten Signalverlauf in einem Beschleunigungssignal 800 und die dazugehörende Deformation eines Fahrzeugs, beispielsweise des in Fig. 1 gezeigten Fahrzeugs 100, gemäß einem Ausführungsbeispiel der vorliegenden Erfindung. In einem kartesischen Koordinatensystem ist ein Signalverlauf eines Beschleunigungssensors dargestellt. Auf der Abszisse ist die Zeit t dargestellt, auf der Ordinate die Beschleunigung a. Im Signalverlauf ist ein signifikantes Maximum, auch bezeichnet als ein charakteristischer Peak, zum Zeitpunkt t1 zu erkennen, gefolgt von einem signifikanten Minimum. Der Signalverlauf zum Zeitpunkt t1 wird als signifikanter Signalverlauf des Kollisionssignals 800 erkannt, der einem Deformationsereignis innerhalb des Fahrzeugs zugeordnet ist. Unterhalb des kartesischen Koordinatensystems ist eine entsprechende Deformation des Fahrzeugs dargestellt. Zum Zeitpunkt t1 ist ein Ereignis in der Fahrzeugstruktur dargestellt. Bei dem Ereignis kann es sich um einen dem signifikanten Signalverlauf zuordenbaren Bruch in einer Struktur des Fahrzeugs handeln. Der Bruch erfolgt, wenn das Fahrzeug um eine Deformationsstrecke D deformiert wurde. Die Bewegungsrichtung des Fahrzeuges ist entgegen der Zeitachse, bzw. die Bewegungsrichtung der Deformation ist entlang der Zeitachse.

Dabei kann es sein, das durch Spannung oder Verkettung von Teilen das für den signifikanten Signalverlauf, hier den Peak zum Zeitpunkt t1, verantwortliche Brechen an anderer Stelle im Fahrzeug stattfindet, allerdings bedingt durch die Vorspannung, die zum Zeitpunkt einer immer gleichen Deformation D erreicht wird (Bild rechts). Der Peak kann in den Ausführungsbeispielen gemäß Fig. 8 und Fig. 9 der Deformation D zugeordnet werden.

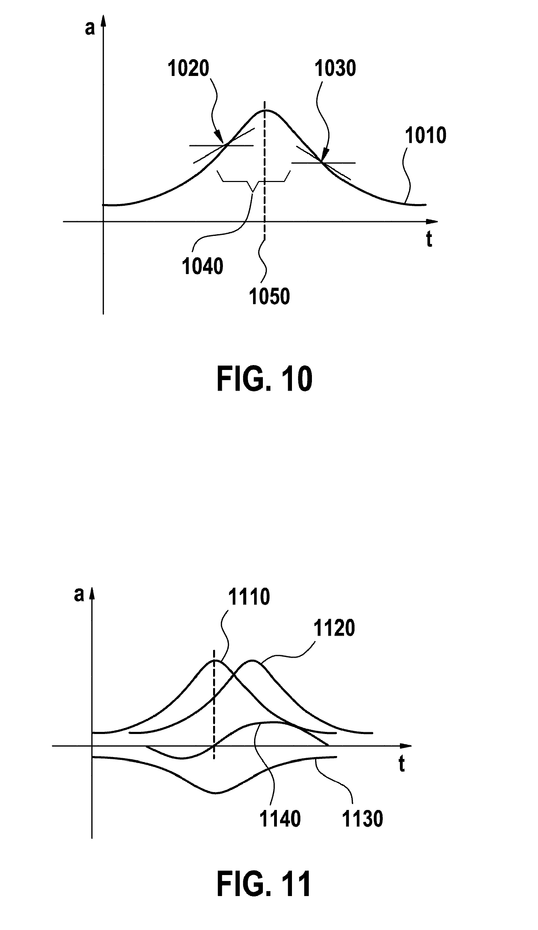

Fig. 10 zeigt einen amplituden- und steigungsabhängigen Spitzenfilter oder Peakfilter für einen Abschnitt 1010 beispielsweise des in Fig. 8 gezeigten Kollisionssignals 800, in einem kartesischen Koordinatensystem gemäß einem Ausführungsbeispiel der vorliegenden Erfindung. Auf der Abszisse ist die Zeit t dargestellt, auf der Ordinate ist die Beschleunigung a dargestellt. Im ersten Quadranten, d. h. durchwegs positive Werte für die Zeit t und die Beschleunigung a, ist eine glockenförmige Kurve 1010 dargestellt, welche eine Beschleunigung über die Zeit darstellt. In einem Punkt 1020 schneidet die glockenförmige Kurve 1010 einen Schwellwert für die Beschleunigung a, d. h. die Amplitude des Signals erreicht einen zuvor festgelegten Grenzwert. Im Punkt 1020 ist eine weitere Gerade mit einer positiven Steigung eingezeichnet. Die Steigung dieser Geraden ist kleiner als die Steigung der glockenförmigen Kurve 1010. In einem Punkt 1030 schneidet die glockenförmige Kurve 1010 einen weiteren zuvor definierten Grenzwert für die Beschleunigung a. In dem gezeigten Ausführungsbeispiel ist der weitere zuvor definierte Grenzwert kleiner als der zuvor festgelegte Grenzwert. Im Punkt 1020 ist eine weitere Gerade mit einer negativen Steigung eingezeichnet. Die Steigung der weiteren Geraden mit negativer Steigung ist kleiner als die Steigung in diesem Punkt der glockenförmigen Kurve 1010. Der Bereich 1040 definiert einen Bereich der minimalen Pulsbreite 1040. Die minimale Pulsbreite 1040 definiert ein Zeitintervall. In dem in Fig. 10 gezeigten Ausführungsbeispiel ist die geforderte minimale Pulsbreite 1040 kleiner als die zeitliche Differenz zwischen den beiden Punkten 1020 und 1030. In dem gezeigten Ausführungsbeispiel erfüllt der Peak in der glockenförmigen Kurve 1010 die geforderten Schwellwerte für die Amplitude, die geforderte minimale Steigung in den Punkten 1020, 1030 der geforderten Schwellwerte sowie die minimale Pulsbreite 1040. Der Mittelwert zwischen den beiden Punkten 1020 und 1030 ergibt den definierten Zeitpunkt 1050 für den dargestellten Peak.

Fig. 11 zeigt die Spitzenerkennung, auch als Peakerkennung bezeichnet, mittels Proportionaldiskriminator gemäß einem Ausführungsbeispiel der vorliegenden Erfindung. In einem kartesischen Koordinatensystem ist auf der Abszisse die Zeit t dargestellt und auf der Ordinate die Beschleunigung a. Weiterhin sind vier Signalverläufe 1110, 1120, 1130 und 1140 dargestellt. Der Signalverlauf 1110 repräsentiert das Originalsignal. Ein Proportionaldiskriminator, auch bezeichnet als Constant Fraction Discriminator, dient zur Erzeugung exakter Zeitmarken aus breiten Impulsen mit wechselnder Signalamplitude, aber konstanter Anstiegszeit. Das Originalsignal 1110 wird um einen festen Zeitbetrag verzögert und als verzögertes Signal 1120 dargestellt. Der feste Zeitbetrag ist kleiner als die Anstiegszeit des Originalsignals 1110. Ferner wird das Originalsignal 1110 invertiert und mit einem Faktor c, wobei 0 < c < 1 gilt, multipliziert und als invertiertes Signal 1130 dargestellt. Das Summensignal 1140 aus der Addition des verzögerten Signals 1120 und des invertierten Signals 1130 mit zur Bestimmung der einem Peak zugeordneten Zeitpunkt t1 verwendet. Der Zeitpunkt t1 entspricht dem ersten Nulldurchgang des Summensignals 1130 mit einer positiven ersten Ableitung.

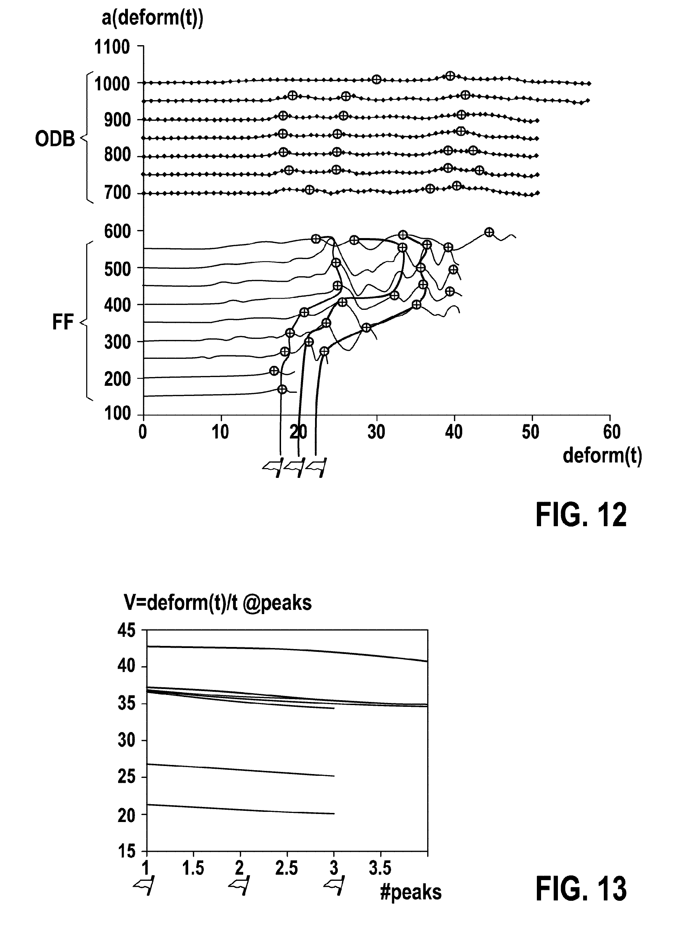

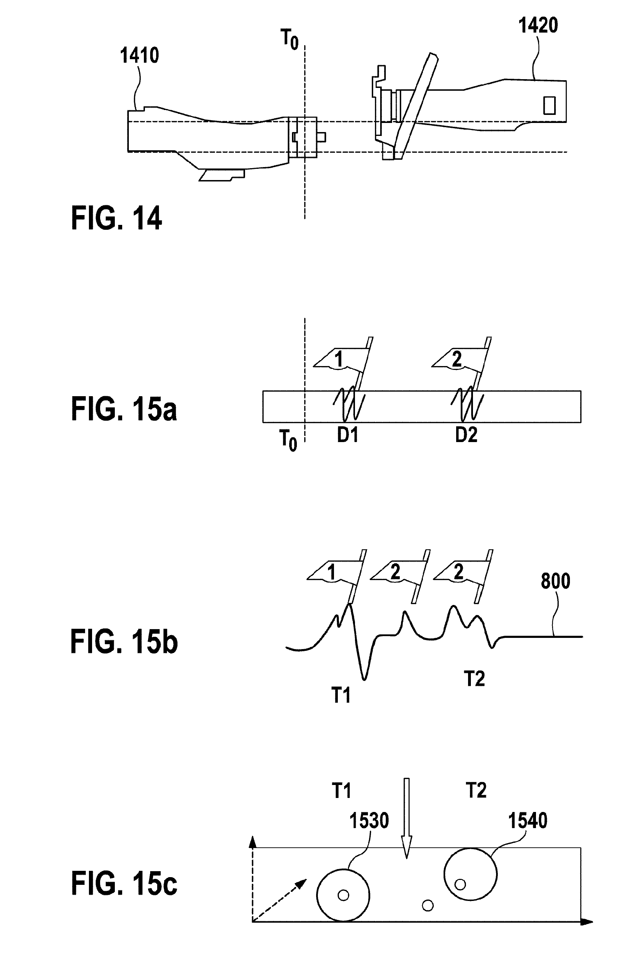

Fig 12 zeigt ein Beispiel detektierter Peaks und Geschwindigkeitsberechnung unter Verwendung der exakten Deformation gemäß einem Ausführungsbeispiel der vorliegenden Erfindung. In einem kartesischen Koordinatensystem ist auf der Abszisse die Deformation als Funktion der Zeit deform(t) dargestellt und auf der Ordinate die Beschleunigung als Funktion der Deformation über die Zeit a(deform(t)) dargestellt. Es sind zwei Gruppen von Signalverläufen für zwei verschiedene Kollisionstypen in dem kartesischen Koordinatensystem dargestellt, welche mit FF für eine Frontalkollision, oder Full Frontal, und mit ODB für eine Offsetkollision gegen eine feststehende deformierbare Barriere, oder Offset Deformable Barrier, bezeichnet werden. ODB ist definiert als ein Crash gegen eine feststehende weiche Barriere mit 40 % Breite der Motorhaube. In jedem Signalverlauf sind zwei bis vier Signalspitzen (Peaks) gekennzeichnet. Es sind sieben Signalverläufe für eine ODB-Kollision dargestellt, wobei diese in einem Bereich von 700-1000 auf der Ordinate mit einem Abstand von jeweils 50 dargestellt sind. Die Signalverläufe für eine ODB-Kollision verlaufen fast gerade und parallel zur Abszisse. Weiterhin sind sieben Signalverläufe für eine FF-Kollision mit einem Startpunkt zwischen 250 und 550 auf der Ordinate dargestellt. Die Signalverläufe für eine FF-Kollision verlaufen zu Beginn vergleichbar zu den Signalverläufen einer ODB-Kollision, jedoch brechen diese ab einem Wert von 18 auf der Abszisse ein. Die signifikanten Signalverläufe lassen sich drei Ereignissen zuordnen. Das erste Ereignis hat einen Wert von 18 auf der Abszisse, das Zweite von 20 und das Letzte von 22. Die Ereignisse sind durch Fähnchen gekennzeichnet, wie sie anhand der Figuren 14 und 15 näher erläutert werden.

Für eine Anwendung im Steuergerät kann deform($T_{peak}$)/$T_{peak}$ im Beispiel oben durch D/$T_{peak}$ ersetz werden. D ist offline aus Crashdaten als Mittelwert der Deformation am ersten, oder auch zweiten oder dritten Peak über alle Kollisionen zu bestimmen.

Eine Schätzung am ersten Peak liefert dabei die besten Ergebnisse, da die Unberechenbarkeit der strukturellen Verformungen und Überlagerungen der Verformung mehrerer Bauteile am geringsten ist. Der erste Peak zeugt beispielsweise vom Übergang der Crashbox auf steifere Strukturen des Fahrzeugs, beispielsweise auf den Längsträger. Der Mittelwert D ist am besten für einzelne Crashtypen, z. B. Full Frontal, Offset Deformable Barrier, getrennt zu bestimmen.

Über einen geeigneten Crash-Typ Algorithmus kann dann das jeweilige D ausgewählt werden. Ist kein Crash-Typ Algorithmus vorhanden, können die Geschwindigkeitsschätzungen parallel bestimmt werden, um beispielsweise den Relativgeschwindigkeitssensor zu plausibilisieren.

$$V^*(D\_soft, T\_peak) \leq EBS(V_{rel}(Sender), m1/m2) \leq V^*(D\_hard, T\_peak)$$

Für m1/m2 ist dabei eine statistische Annahme zu treffen, z. B. $0.5 \leq m1/m2 \leq 2$ für halbschwere und doppelt schwere Kollisionspartner.

Die Genauigkeit wird erhöht, indem ungewollte Peaks aussortiert werden.

Fig. 13 zeigt für verschiedene Crash-Versuche die berechnete Kollisionsgeschwindigkeit über die Anzahl der Peaks, respektive der zugeordneten Ereignisse gemäß einem Ausführungsbeispiel der vorliegenden Erfindung. In einem kartesischen Koordinatensystem ist auf der Abszisse die Anzahl der Peaks und auf der Ordinate die Geschwindigkeit als Funktion der Deformation über die Zeit dargestellt. Die eingezeichneten Signalverläufe weisen über die Anzahl der Peaks eine fast gleichbleibende, nur geringfügig sinkende Geschwindigkeit auf. Hierdurch wird deutlich, dass die Aussage über die Kollisionsgeschwindigkeit bereits beim Auftreten des ersten signifikanten Signalverlaufs zuverlässig getroffen werden kann.

Die Figuren 14, 15a, 15b und 15c zeigen eine Möglichkeit zur Eingrenzung der relevanten gewünschten Peaks über die Deformation selbst gemäß einem Ausführungsbeispiel der vorliegenden Erfindung. Für die Eingrenzung der relevanten gewünschten Peaks kann neben dV, dS, a und t auch die Deformation selbst verwendet werden. Dabei wird die Deformation unter Annahme, dass der Relativgeschwindigkeitssensor korrekte Geschwindigkeit misst, berechnet und an der Stelle Deformation_Sensor(t)+/-Tol = D ein Signalspitzenwert (Peak) erwartet. Bestätigt sich das Auftreten des Peaks, ist damit die Geschwindigkeit vom Sensor bestätigt.

Fig. 14 zeigt die Fahrzeugstrukturen 1410, 1420 zweier Personenkraftwagen, im Zeitpunkt $T_0$ der Kollision der beiden Fahrzeuge. Gezeigt werden die vorderen Längsträger und Crashboxstrukturen, die den charakteristischen Deformationsweg vorgeben. Ein sich durch die Kollision ergebender Deformationsweg sowie während des Deformationswegs auftretende feststehende Ereignisse, beispielsweise Brüche in der Fahrzeugstruktur, sind in den Figuren 15a bis 15c gezeigt.

Fig. 15a zeigt eine Darstellung des Deformationsweges über die Zeit und sich aus der Fahrzeugstruktur und der Kollisionsart im Verlauf des Deformationswegs ergebenden feststehenden Ereignissen. Als feststehend können die Ereignisse bezeichnet werden, da ein feststehender oder vorbekannter Zusammenhang zwischen einem Ereignis und einem zugehörigen Deformationsweg besteht. Die Darstellung kann als eine Darstellung auf einem Zeitstrahl oder Deformationsstrahl verstanden werden. Auf dem Strahl der Deformation ist der Kollisionsbeginn $T_0$, ein erstes Ereignis D1 in der Fahrzeugstruktur und ein zweites Ereignis D2 in der Fahrzeugstruktur dargestellt. Zu jedem Ereignis D1, D2 ist ein signifikanter Signalverlauf zugeordnet und mit einem Fähnchen 1 für D1 und einem Fähnchen 2 für D2 markiert. Die Deformation kann als Funktion dargestellt werden:

$$\mathrm{Deform}(T) = V_0 * \cdot T - \int_0^T\int a(t)dt$$

Fig.15b zeigt einen Signalverlauf eines Kollisionssignals 800 und korrelierende Ereignisse nach einer Kollision. Das Kollisionssignal 800 entspricht der erfassten Beschleunigung a(t) eines Beschleunigungssensors. Zum Zeitpunkt T1 und zum Zeitpunkt T2 weist der Signalverlauf 800 charakteristische Peaks auf. Zu einem Zeitpunkt nach dem Zeitpunkt T1 aber vor dem Zeitpunkt T2 weist der Signalverlauf 800 einen weiteren charakteristischen Peak auf, welcher einem Ereignis D2 während der Deformation zugeordnet werden könnte. Eine Signalanalyse liefert nach der Analyse des Signalverlaufs 800 ein Ereignis D1 und zwei mögliche Ereignisse D2. Ein Analysealgorithmus, der in Fig 15c näher erläutert wird, können die relevanten, gewünschten Peaks eingegrenzt werden. Die Kollisionsgeschwindigkeit kann mit folgender Formel berechnet werden:

$$V_0{}^* = \frac{\mathrm{Deform}(\mathrm{T}i)}{\mathrm{T}i}$$

Fig. 15c zeigt den Ausschluss von falschen signifikanten Signalverläufen bzw. Ereignissen durch sekundäre Daten. In einem kartesischen Koordinatensystem ist auf der Abszisse die Zeit t oder die Deformation D dargestellt. Auf der Ordinate können sekundäre Daten wie die Ableitung der Geschwindigkeit dV, die Ableitung des Weges ds die Beschleunigung a oder die Zeit t. Die Annahme einer korrekten Relativgeschwindigkeit des Relativgeschwindigkeitssensors führt zu erwarteten Peaks, welche mit einer definierten Toleranz versehen werden. Zwei erwartete Ereignisse mit einer definierten Toleranz sind als Kreise 1530, 1540 in das Koordinatensystem eingezeichnet. Der Kreis 1530 ist dem in Fig 15a gezeigten Ereignis D1 und der Kreis 1540 ist dem in Fig 15a gezeigten Ereignis D2 zugeordnet. Berechnete Ereignisse, die innerhalb der Kreise 1530, 1540 eingetragen sind, werden automatisch validiert, Ereignisse, die außerhalb der Kreise 1530, 1540 eingetragen werden, werden automatisch ausgeschlossen.

Das in den Figuren 15a und 15b ermittelte Ereignis D1 zum Zeitpunkt T1 fällt in den ersten Kreis 1530, und wird validiert. Aus dem in Fig. 15b gezeigten Signalverlauf 800 ergeben sich zwei signifikante Signalverläufe (gekennzeichnet durch zwei Fähnchen mit der Ziffer 2), die aufgrund ihrer Signalform jeweils auf das in Fig. 15a gezeigte Ereignis D2 hindeuten. Die beiden in Fig. 15b gezeigten möglichen Ereignisse D2 sind ebenfalls in die Grafik in Fig. 15c eingetragen. Nur das in der zeitlichen Abfolge zweite Ereignis der beiden möglichen Ereignisse D2 fällt in den Kreis 1540, und wird validiert. Das zeitlich zwischen T1 und T2 liegende andere mögliche Ereignis D2 wird ausgeschlossen, bzw. ausgefiltert, da es sich außerhalb des Kreises 1540 befindet.

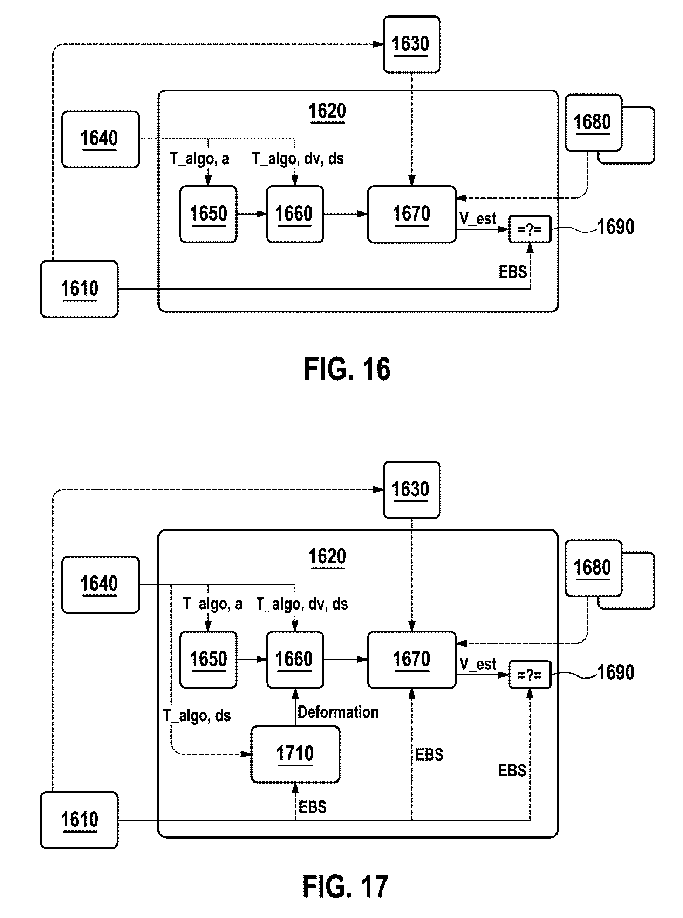

Fig. 16 zeigt ein Ablaufdiagramm einer Bestimmung einer Kollisionsgeschwindigkeit mit Plausibilitätskontrolle gemäß einem Ausführungsbeispiel der vorliegenden Erfindung. Es entsteht ein Geschwindigkeitsschätzwert aus den Beschleunigungsdaten, welcher in einem Airbagalgorithmus verwendet werden kann. Somit wird die Verwendung der Relativgeschwindigkeit auch für Systeme, in denen es keinen Relativgeschwindigkeitssensor gibt, ermöglicht.

Ein Block 1610 umfasst die Bestimmung der barrierenäquivalenten Kollisionsgeschwindigkeit gemäß einem Verfahren zur Bestimmung einer Kollisionsgeschwindigkeit, wie es beispielsweise anhand von Fig. 2 beschrieben ist, und übergibt diese an einen Block 1620 zur Plausibilisierung der Relativgeschwindigkeit zwischen den Kollisionspartnern. Nach der Bestimmung der barrierenäquivalenten Kollisionsgeschwindigkeit im Block 1610 wird im Falle einer Kollision in einem Block 1630 mittels eines Kollisionstyp-Algorithmus der Kollisionstyp beziehungsweise die Kollisionsschwere bestimmt. In einem Block 1640 wird der Algorithmus zur Plausibilitätskontrolle gestartet und relevante Parameter berechnet. An einen Block 1650 mit einem Spitzenfilter, oder Peakfilter werden der Zeitpunkt $T_{algo}$ und die Beschleunigung a übergeben, an einen Block 1660 zur Qualifikation der signifikanten Signalverläufe oder Spitzenwerte, auch als Peak-Qualifizierer bezeichnet, werden der Zeitpunkt $T_{algo}$ und die Ableitung der Geschwindigkeit dV und die Ableitung der Wegstrecke ds vom Block 1640 übergeben. Der Block 1650 stellt sein Ergebnis dem Block 1660 zur Verfügung. Der Zeitpunkt $T_{peak}$ des signifikanten Signalverlaufs wird vom Block 1660 an den Block 1670 übergeben, in welchem die Geschwindigkeit $V_0$ mittels der Funktion $V_0 = V_{est} = $ Deformation $/T_{peak}$ bestimmt wird. Der Block 1670 hat einen Eingang zum empfangen einer Information über den Kollisionstyp, beispielsweise hart oder weich, vom Block 1630 und einen Eingang zum Empfangen einer Information über die Deformation zum Zeitpunkt des signifikanten Signalverlaufs, welche in einem Block 1680 separat pro Kollisionstyp zur Verfügung gestellt wird. Der Block 1680 kann somit in einer vorangegangenen Datenermittlung (offline data training) ermittelte Daten für die Deformation zum Zeitpunkt des signifikanten Signalverlaufs bei einem harten Kollisionstyp und einem weichen Kollisionstyp umfassen und an den Block 1670 bereitstellen. Das Ergebnis von Block 1670 wird mit der, von Block 1610 zur Verfügung gestellten, barrierenäquivalenten Kollisionsgeschwindigkeit in Block 1690 verglichen.

Fig. 17 zeigt ein Ablaufdiagramm der erfindungsgemäßen Lösung mit Plausibilitätskontrolle durch einen Relativgeschwindigkeitssensor gemäß einem Ausführungsbeispiel der vorliegenden Erfindung. Ein Block 1610 umfasst die Bestimmung der barrierenäquivalenten Kollisionsgeschwindigkeit gemäß dem erfindungsgemäßen Verfahren 200 und übergibt diese an einen Block 1620. Nach der Bestimmung der barrierenäquivalenten Kollisionsgeschwindigkeit im Block 1610 wird im Falle einer Kollision in einem Block 1630 mittels eines Kollisionstyp-Algorithmus der Kollisionstyp beziehungsweise die Kollisionsschwere bestimmt. In einem Block 1640 wird der Algorithmus zur Plausibilitätskontrolle gestartet und relevante Parameter berechnet. Das Diagramm in Fig. 17 weist im Gegensatz zur Fig. 16 einen weiteren Block 1710 auf, welcher die Deformation unter Verwendung der Relativgeschwindigkeit des Relativgeschwindigkeitssensors und dem Zeitpunkt $T_{algo}$ bestimmt. Hierzu hat der Block 1710 eine Verbindung zu dem Block 1610 und dem Block 1640.

An einen Block 1650 mit einem Spitzenfilter, oder Peakfilter, werden eine Information über den Zeitpunkt $T_{algo}$ und die Beschleunigung a übergeben, an einen Block 1660 zur Qualifikation der signifikanten Signalverläufe oder Spitzenwerte, auch als Peak-Qualifizierer bezeichnet, werden der Zeitpunkt $T_{algo}$ und die Ableitung der Geschwindigkeit dV und die Ableitung der Wegstrecke ds vom Block 1640 übergeben. Der Block 1650 stellt sein Ergebnis dem Block 1660 zur Verfügung. Die im Block 1710 bestimmte Deformation wird an den Block 1660 übergeben. Der Zeitpunkt $T_{peak}$ des signifikanten Signalverlaufs wird vom Block 1660 an den Block 1670 übergeben, in welchem die Geschwindigkeit $V_0$ mittels der Funktion $V_0 = V_{est} =$ Deformation $T_{peak}$ bestimmt wird. Der Block hat einen Eingang für den Kollisionstyp, wie hart, weich, vom Block 1630 und einen Eingang für die Deformation zum Zeitpunkt des signifikanten Signalverlaufs, welche in einem Block 1680 separat pro Kollisionstyp zur Verfügung gestellt wird. Das Ergebnis von Block 1670 wird mit der vom Block 1610 zur Verfügung gestellten barrierenäquivalenten Kollisionsgeschwindigkeit in Block 1690 verglichen.

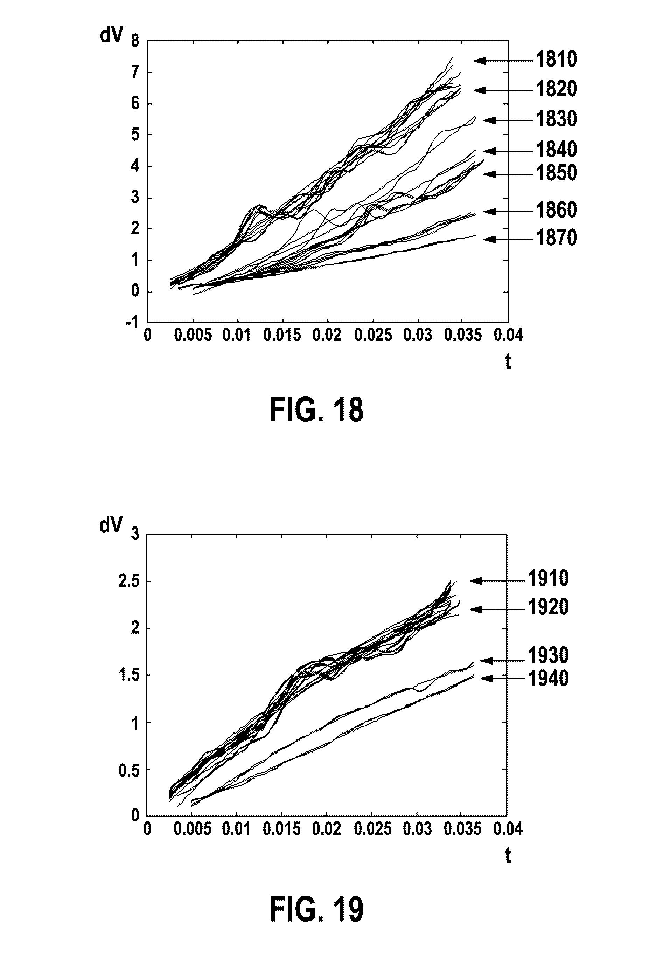

Fig. 18 zeigt Trainingsdatensätze für eine Frontalkollision (FF - Full Frontal) für eine indirekte Plausibilisierung der Relativgeschwindigkeit ohne explizite Berechnung einer Vergleichsgeschwindigkeit gemäß einem Ausführungsbeispiel der vorliegenden Erfindung. In einem kartesischen Koordinatensystem ist auf der Abszisse die Zeit t und auf der Ordinate die Ableitung der Geschwindigkeit dV dargestellt. Die Signalverläufe haben eine stetig positive Steigung. Es sind Signalverläufe für unterschiedliche Geschwindigkeiten wiedergegeben: Signalverläufe 1810 für 41 mph, Signalverläufe 1820 für 35 mph, Signalverläufe 1830 für 25 mph, Signalverläufe 1840 für 20 mph, Signalverläufe 1850 für 16 mph, Signalverläufe 1860 für 13 mph und Signalverläufe 1870 für 10 mph.

Es wird angenommen, dass aus den Beschleunigungsdaten berechnete Größen (dV, ds,..) in einem gewissen Sinne proportional zur Kollisionsgeschwindigkeit sind. Für verschiedene Kollisionstests, oder Crashtests, werden diese Referenzgrößen berechnet und im Steuergerät als Referenzkurven abgelegt. Dies geschieht für jede mögliche Geschwindigkeit in einem bestimmten Raster. Alternativ können die Referenzkurven aus Crashmodellen für jede Geschwindigkeit erzeugt werden. Bei einem Crash wird dann über die vom Geschwindigkeitssensor gelieferte Geschwindigkeit, die dieser Geschwindigkeit zugehörige Kennlinie ausgewählt und mit der während des Crashverlaufs online berechneten wirklichen Kurve verglichen. Annähernde Gleichheit bedeutet dabei eine plausible Geschwindigkeit.

Fig. 19 zeigt Trainingsdatensätze für eine Offset-Kollision gegen eine feststehende deformierbare Barriere (ODB - Offset Deformable Barrier) für eine indirekte Plausibilisierung der Relativgeschwindigkeit ohne explizite Berechnung einer Vergleichsgeschwindigkeit gemäß einem Ausführungsbeispiel der vorliegenden Erfindung. In einem kartesischen Koordinatensystem ist auf der Abszisse die Zeit t und auf der Ordinate die Ableitung der Geschwindigkeit dV dargestellt. Die Signalverläufe haben eine stetig positive Steigung. Es sind Signalverläufe für unterschiedliche Geschwindigkeiten wiedergegeben: Signalverläufe 1910 für 45 mph, Signalverläufe 1920 für 40 mph, Signalverläufe 1930 für 25 mph und Signalverläufe 1940 für 20 mph.

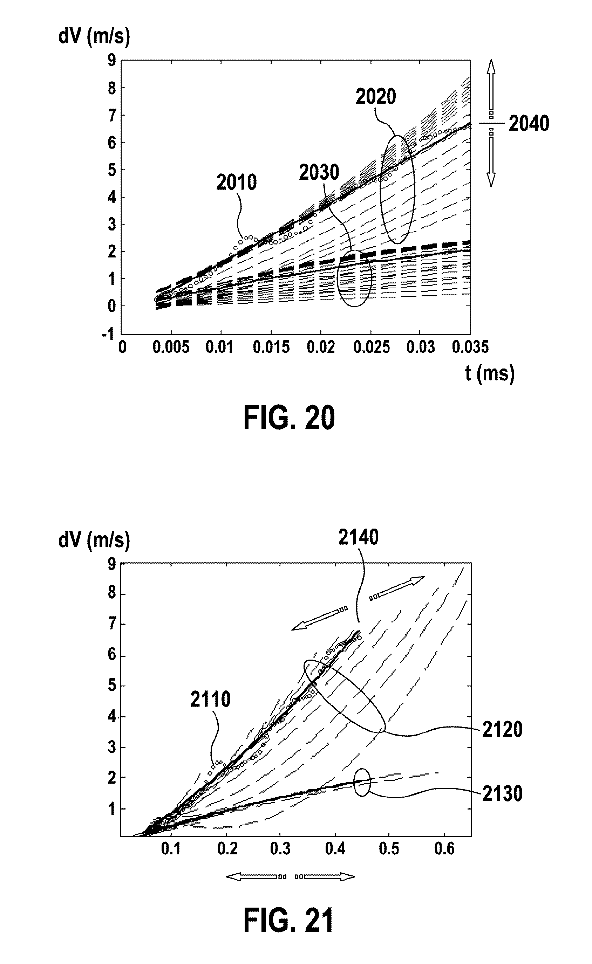

Fig. 20 zeigt die Auswahl einer Referenzkurve für die Ableitung der Geschwindigkeit, dargestellt über die Zeit gemäß einem Ausführungsbeispiel der vorliegenden Erfindung. In einem kartesischen Koordinatensystem ist auf der Abszisse die Zeit und auf der Ordinate die Ableitung nach der Geschwindigkeit dV dargestellt. Es wird der exakte Signalverlauf 2010 für eine komplette Frontalkollision, oder Full Frontal Crash, bei 35 mph sowie Referenzkurven 2020 für eine komplette Frontalkollision sowie Referenzkurven 2030 für eine Offset-Kollision gegen eine weiche Barriere, auch als ODB-Kollision, Offset Deformable Barrier Crash bezeichnet, dargestellt. Bei Auswahl einer Referenzkurve im Bereich 2040 aus der Schar der Referenzkurven 2020 entspricht die Referenzkurve der Realität exakt, wird einer höher gelegene Kurve ausgewählt, entsprechend der Pfeilrichtung nach oben, so ist die vom Relativgeschwindigkeitssensor gelieferte Relativgeschwindigkeit zu hoch. Wird eine tiefer gelegene Kurve ausgewählt, entsprechend der Pfeilrichtung nach unten, so ist die vom Relativgeschwindigkeitssensor gelieferte Relativgeschwindigkeit zu niedrig.

Fig. 21 zeigt die Auswahl einer Referenzkurve für die Ableitung der Geschwindigkeit, dargestellt über die Deformation gemäß einem Ausführungsbeispiel der vorliegenden Erfindung. In einem kartesischen Koordinatensystem ist auf der Abszisse die Deformation und auf der Ordinate die Ableitung nach der Geschwindigkeit dV dargestellt. Es wird der exakte Signalverlauf 2110 für eine komplette Frontalkollision, oder Full Frontal Crash, bei 35 mph, sowie Referenzkurven 2120 für eine komplette Frontalkollision sowie Referenzkurven 2130 für eine Offset-Kollision gegen eine weiche Barriere, auch als ODB-Kollision, Offset Deformable Barrier Crash bezeichnet, dargestellt. Bei Auswahl einer Referenzkurve im Bereich 2140 aus der Schar der Referenzkurven 2120 entspricht die Referenzkurve der Realität exakt, wird eine weiter rechts gelegene Kurve ausgewählt, entsprechend der Pfeilrichtung nach rechts, so ist die vom Relativgeschwindigkeitssensor gelieferte Relativgeschwindigkeit zu hoch. Wird eine weiter links gelegene Kurve ausgewählt, entsprechend der Pfeilrichtung nach links, so ist die vom Relativgeschwindigkeitssensor gelieferte Relativgeschwindigkeit zu niedrig.

Zum Festlegen der Referenzkurven am Beispiel von dV empfiehlt es sich wiederum nach Crashtypen getrennt zu verfahren, und eine Auswahl der Kurven über einen Crashtypenalgorithmus vorzunehmen, bzw. zu fordern:

$$V^* := EBS(Vrel\_Sensor, m1/m2\_Annahme)$$

$$RefCurve(V^*, soft) \leq Curve(crash) \leq RefCurve(V^*, hard)$$

Die Referenzkurven werden über der Deformation (als Abszisse) aufgetragen und ausgewertet. Gegenüber der Zeit (t als Abszisse) hat das den Vorteil, dass falsche Geschwindigkeiten zu einer höheren Abweichung der ausgewählten Referenzkurve gegenüber der aus den Beschleunigungsdaten berechneten Kurve führen.

Die falsche Geschwindigkeit geht dabei auch in die Deformation, also in die Abszisse ein. Es wird somit eine falsche Referenzkurve ausgewählt und über einer falschen Abszisse ausgewertet.

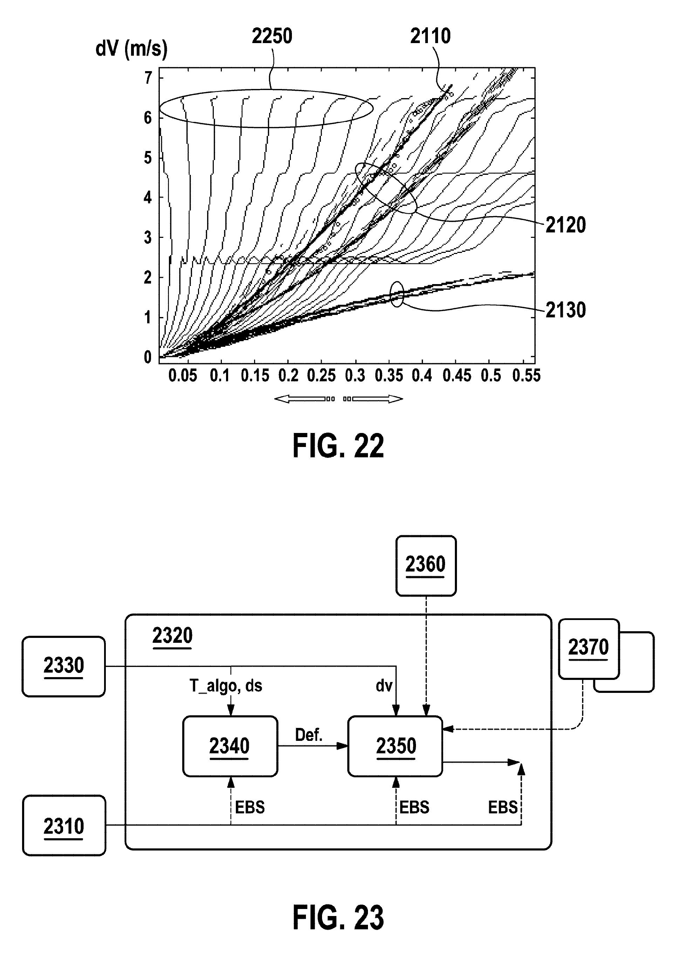

Fig. 22 zeigt die Auswahl einer Referenzkurve für die Ableitung der Geschwindigkeit, dargestellt über die Deformation gemäß einem Ausführungsbeispiel der vorliegenden Erfindung. In einem kartesischen Koordinatensystem ist auf der Abszisse die Deformation und auf der Ordinate die Ableitung nach der Geschwindigkeit dV dargestellt. Es wird der exakte Signalverlauf 2110 für eine komplette Frontalkollision oder Full Frontal Crash, bei 35 mph sowie Referenzkurven 2120 für eine komplette Frontalkollision sowie Referenzkurven 2130 für eine Offset-Kollision gegen eine weiche Barriere, auch als ODB-Kollision, Offset Deformable Barrier Crash bezeichnet, dargestellt. Die Kurvenschar 2250 zeigt dV über falscher Deformation.

Fig. 23 zeigt eine Architektur des erfindungsgemäßen Verfahrens 200 gemäß einem Ausführungsbeispiel der vorliegenden Erfindung. Ein Block 2310 umfasst die Bestimmung der barrierenäquivalenten Kollisionsgeschwindigkeit EBS gemäß dem erfindungsgemäßen Verfahren 200 und übergibt diese an einen Block 2320. In einem Block 2330 wird der Algorithmus zur Plausibilitätskontrolle gestartet und relevante Parameter berechnet. Der Block 2320 umfasst zwei Blöcke 2340 und 2350. Der Block 2340 hat einen Eingang für die barrierenäquivalente Kollisionsgeschwindigkeit und die im Block 2330 bestimmten Parameter Zeitpunkt des Algorithmus $T_{algo}$ und die Ableitung der Wegstrecke ds. Im Block 2340 wird die Deformation als Funktion von Zeitpunkt des Algorithmus $T_{algo}$, Ableitung der Wegstrecke ds und barrierenäquivalenten Kollisionsgeschwindigkeit bestimmt und dem Block 2350 zur Verfügung gestellt. Im Falle einer Kollision wird in einem Block 2360 mittels eines Kollisionstyp-Algorithmus der Kollisionstyp beziehungsweise die Kollisionsschwere bestimmt. Der Block 2350 hat einen Eingang für die im Block 2360 bestimmte Kollisionsschwere, die im Block 2330 bestimmte Ableitung der Geschwindigkeit und die im Block 2310 bestimmte barrierenäquivalente Kollisionsgeschwindigkeit EBS, sowie für im Block 2370 zur Verfügung gestellte, kollisionstyp-abhängige Offline-Trainingsdaten für unterschiedliche Kollisionstypen, wie weich und hart. Im Block 2350 wird die Plausibilität der berechneten Werte durch einen Vergleich mit den Trainingsdaten und Berechnung der Abweichung überprüft.

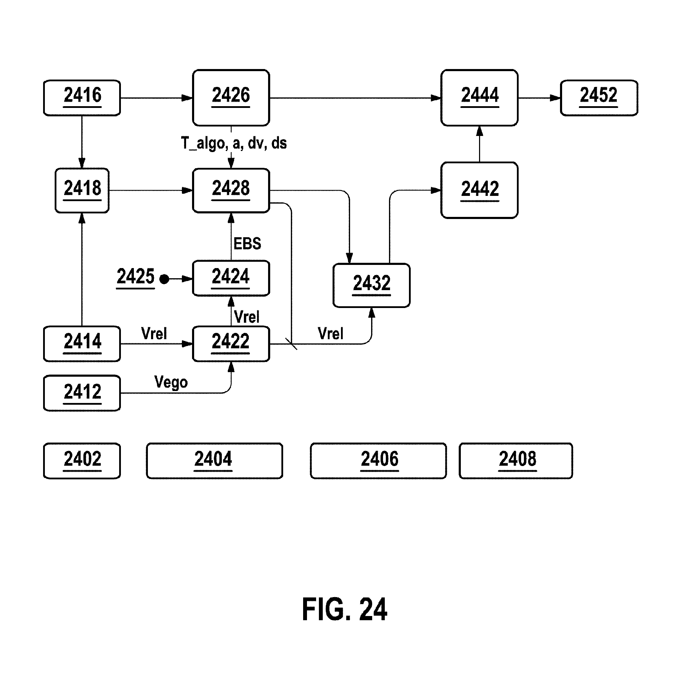

Fig. 24 zeigt eine Einbettung der Kollisionsgeschwindigkeitsbestimmung gemäß des erfindungsgemäßen Verfahrens 200 in einen Airbag-Algorithmus gemäß einem Ausführungsbeispiel der vorliegenden Erfindung. Das in Fig. 24 dargestellte Konzept umfasst vier Bereiche, die durch die Blöcke Sensordaten 2402, Geschwindigkeitsüberprüfung 2404, Geschwindigkeitskorrektur 2406 und Schwellwertanpassung 2408 gekennzeichnet sind. Der Bereich der Sensordaten 2402 umfasst einen Fahrzeug-Geschwindigkeitssensor 2412, einen Relativgeschwindigkeitssensor 2414 und einen Beschleunigungssensor 2416. Zwei Eingänge eines Kollisionstyp-Algorithmus 2418 sind verbunden mit dem Beschleunigungssensor 2416 und dem Relativgeschwindigkeitssensor 2414.

Im Bereich der Geschwindigkeitsüberprüfung 2404 hat ein Block 2422 zur Erkennung von stehenden Objekten einen Eingang für die Eigengeschwindigkeit $V_{ego}$ des Fahrzeugs 100 vom Block 2412 und einen Eingang für die Relativgeschwindigkeit $V_{rel}$ vom Relativgeschwindigkeitssensor. Die Relativgeschwindigkeit $V_{rel}$ wird weitergegeben an einen Block 2424 zur Bestimmung der barrierenäquivalenten Kollisionsgeschwindigkeit EBS unter Verwendung einer Annahme des Masseverhältnisses 2425 zwischen dem Fahrzeug 100 und dem Kollisionsobjekt 105.

In einem Block 2426 des Algorithmus-Starts und der Parameterbestimmung werden aus den im Block 2416 ermittelten Beschleunigungswerten abgeleitete Parameter bestimmt und an den Block 2428 zur Plausibilitätskontrolle der Relativgeschwindigkeit $V_{rel}$ übergeben. Der Block 2428 ist weiterhin verbunden mit dem Block 2418 und dem Block 2424. Unter Verwendung der barrierenäquivalenten Kollisionsgeschwindigkeit EBS, dem Kollisionstyp und der Relativgeschwindigkeit $V_{rel}$ sowie den im Block 2426 bestimmten Parametern wird die Relativgeschwindigkeit $V_{rel}$ plausibilisiert und eine Abschätzung über die barrierenäquivalente Kollisionsgeschwindigkeit EBS getroffen. Der Block 2432 im Bereich der Geschwindigkeitskorrektur 2406 korrigiert bei Bedarf unter Verwendung einer Masseschätzung die die barrierenäquivalente Kollisionsgeschwindigkeit EBS. Hierzu ist der Block 2432 verbunden mit dem Block 2422 und dem Block 2428. Der Block 2432 ist weiterhin verbunden mit dem Eingang des Blocks 2442 zur Einteilung der plausibilisierten barrierenäquivalenten Kollisionsgeschwindigkeit EBS in Geschwindigkeitsklassen im Bereich der Schwellwertanpassung 2408. Der Ausgang des Blocks 2442 ist verbunden mit einem Eingang des Blocks 2444 des beschleunigungsbasierten Algorithmus. Ein weiterer Eingang des Blocks 2444 ist mit einem Ausgang des Blocks 2426 verbunden. Ein Ausgang des Blocks 2444 ist verbunden mit einem Eingang des Blocks 2452 "Front Power Stage" als Teil des Airbag-Algorithmus.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

**Patentansprüche**

1. Verfahren zur Bestimmung einer Kollisionsgeschwindigkeit bei einer Kollision eines Fahrzeugs, welches die folgenden Schritte umfasst:

   Ermitteln (130) eines Zeitpunkts eines signifikanten Signalverlaufs eines Kollisionssignals (800), das ein Signal eines Sensors (110) des Fahrzeuges (100) repräsentiert; und
   Bestimmen (140) der Kollisionsgeschwindigkeit unter Verwendung des Zeitpunkts des signifikanten Signalverlaufs.

2. Verfahren gemäß Anspruch 1, bei dem im Schritt des Bestimmens (140) die Kollisionsgeschwindigkeit unter Verwendung eines dem signifikanten Signalverlauf zugeordneten Deformations-Wert und einem Zeitraum zwischen einem der Kollision zugeordneten Referenzzeitpunkt und dem Zeitpunkt des signifikanten Signalverlaufs bestimmt wird.

3. Verfahren gemäß Anspruch 2, mit einem Schritt des Bestimmens (140) des Beginns der Kollision als den Referenzzeitpunkt, der einen Kollisionsbeginn repräsentiert.

4. Verfahren gemäß einem der vorangegangenen Ansprüche, bei dem im Schritt des Bestimmens (140) eine Division zwischen Deformationswert und der Differenz aus dem der Kollision zugeordneten Referenzzeitpunkt und dem Zeitpunkt des signifikanten Signalverlaufs durchgeführt wird, um die Kollisionsgeschwindigkeit zu bestimmen.

5. Verfahren gemäß einem der vorangegangenen Ansprüche, bei dem im Schritt des Ermittelns (130) der signifikante Signalverlauf mittels eines amplituden- und steigungsabhängigen Filters und/oder mittels eines Proportionaldiskriminators ermittelt wird.

6. Verfahren gemäß einem der vorangegangenen Ansprüche, bei dem im Schritt des Ermittelns (130) mindestens ein weiterer Zeitpunkt eines weiteren signifikanten Signalverlaufs des Kollisionssignals (800) ermittelt wird, und bei dem im Schritt des Bestimmens die Kollisionsgeschwindigkeit unter Verwendung des Zeitpunkts des signifikanten Signalverlaufs und des weiteren Zeitpunktes bestimmt wird.

7. Verfahren gemäß einem der vorangegangenen Ansprüche, bei dem die Kollisionsgeschwindigkeit ferner unter Verwendung eines Kollisionstyps bestimmt wird.

8. Verfahren gemäß einem der vorangegangenen Ansprüche, mit einem Schritt des Plausibilisierens einer Relativgeschwindigkeit unter Verwendung der Kollisionsgeschwindigkeit, wobei die Relativgeschwindigkeit einen eine Geschwindigkeit des Fahrzeugs relativ zu einem Kollisionsobjekt repräsentierenden Wert eines Relativgeschwindigkeitssensors repräsentiert.

9. Vorrichtung, die ausgebildet ist, um die Schritte eines Verfahrens gemäß einem der Ansprüche 1 bis 8 durchzuführen.

10. Computer-Programmprodukt mit Programmcode zur Durchführung des Verfahrens nach einem der Ansprüche 1 bis 8, wenn das Programm auf einer Vorrichtung ausgeführt wird.

**FIG. 1**

**FIG. 2**

**FIG. 3**

**FIG. 4**

FIG. 5

FIG. 6

**FIG. 7**

**FIG. 8**

**FIG. 9**

**FIG. 10**

**FIG. 11**

**FIG. 12**

**FIG. 13**

**FIG. 14**

**FIG. 15a**

**FIG. 15b**

**FIG. 15c**

FIG. 16

FIG. 17

FIG. 18

FIG. 19

**FIG. 20**

**FIG. 21**

FIG. 22

FIG. 23

FIG. 24

**Europäisches Patentamt**
**European Patent Office**
**Office européen des brevets**

**EUROPÄISCHER RECHERCHENBERICHT**

Nummer der Anmeldung

EP 13 15 1547

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 34 331 C1 (BOSCH GMBH ROBERT [DE]) 10. Oktober 2002 (2002-10-10) * Absatz [0001] - Absatz [0010] * * Absatz [0017] - Absatz [0046] * ----- | 1-10 | INV. B60R21/0136 |

RECHERCHIERTE SACHGEBIETE (IPC)

B60R

Der vorliegende Recherchenbericht wurde für alle Patentansprüche erstellt

| Recherchenort | Abschlußdatum der Recherche | Prüfer |
|---|---|---|
| Berlin | 22. April 2013 | Giesen, Fabian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 15 1547

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2013

| Im Recherchenbericht angeführtes Patentdokument | Datum der Veröffentlichung | Mitglied(er) der Patentfamilie | Datum der Veröffentlichung |
|---|---|---|---|
| DE 10134331 C1 | 10-10-2002 | DE 10134331 C1 | 10-10-2002 |
| | | EP 1409297 A1 | 21-04-2004 |
| | | US 2005012312 A1 | 20-01-2005 |
| | | WO 03008239 A1 | 30-01-2003 |

EPO FORM P0461

Für nähere Einzelheiten zu diesem Anhang : siehe Amtsblatt des Europäischen Patentamts, Nr.12/82